(19) Europäisches Patentamt
European Patent Office
Office européen des brevets

(11) **EP 4 668 008 A1**

(12) **EUROPEAN PATENT APPLICATION**
published in accordance with Art. 153(4) EPC

(43) Date of publication:
**24.12.2025 Bulletin 2025/52**

(21) Application number: **24756842.1**

(22) Date of filing: **09.02.2024**

(51) International Patent Classification (IPC):
*G02F 1/13357* (2006.01)    *F21S 2/00* (2016.01)
*F21V 3/00* (2015.01)    *F21V 9/40* (2018.01)
*G02F 1/1335* (2006.01)    *F21Y 115/10* (2016.01)
*F21Y 115/15* (2016.01)    *F21Y 115/30* (2016.01)

(52) Cooperative Patent Classification (CPC):
**F21S 2/00; F21V 3/00; F21V 9/40; G02F 1/1335;
G02F 1/1336;** F21Y 2115/10; F21Y 2115/15;
F21Y 2115/30

(86) International application number:
**PCT/JP2024/004682**

(87) International publication number:
**WO 2024/171997 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 JP 2023023524
10.08.2023 JP 2023131632**

(71) Applicant: **Kyocera Corporation
Kyoto-shi, Kyoto 612-8501 (JP)**

(72) Inventors:
• **MORISHITA, Katsuhiko
Kyoto-shi, Kyoto 612-8501 (JP)**
• **TANAKA, Yoshiki
Kyoto-shi, Kyoto 612-8501 (JP)**
• **OZAWA, Ryosuke
Kyoto-shi, Kyoto 612-8501 (JP)**
• **EBISU, Yoichi
Kyoto-shi, Kyoto 612-8501 (JP)**

(74) Representative: **TBK
Bavariaring 4-6
80336 München (DE)**

(54) **LIQUID CRYSTAL DISPLAY DEVICE AND VIRTUAL IMAGE DISPLAY DEVICE**

(57)    A liquid crystal display includes a backlight, a lens member, a diffuser plate, and a liquid crystal panel. The backlight includes a substrate including a first surface and a plurality of light emitters located on the first surface. The lens member is configured to anisotropically diffuse light emitted from the backlight. The diffuser plate is configured to diffuse the light emitted from the lens member. The liquid crystal panel is configured to receive the light emitted from the diffuser plate. The lens member and the diffuser plate are at a distance of 0 to 72 mm inclusive.

FIG. 2

**Description**

TECHNICAL FIELD

The present disclosure relates to a liquid crystal display and a virtual image display device.

BACKGROUND OF INVENTION

A known liquid crystal display is described in, for example, Patent Literature 1.

CITATION LIST

PATENT LITERATURE

Patent Literature 1: WO 2019/138722

SUMMARY

In an aspect of the present disclosure, a liquid crystal display includes a backlight, a lens member, a diffuser plate, and a liquid crystal panel. The backlight includes a substrate including a first surface and a plurality of light emitters located on the first surface. The lens member is configured to anisotropically diffuse light emitted from the backlight. The diffuser plate is configured to diffuse the light emitted from the lens member. The liquid crystal panel is configured to receive the light emitted from the diffuser plate. The lens member and the diffuser plate are at a distance of 0 to 72 mm inclusive.

In an aspect of the present disclosure, a virtual image display device includes the above liquid crystal display and an optical system. The optical system is configured to cause a user to view image light emitted from the liquid crystal display as a virtual image.

BRIEF DESCRIPTION OF THE DRAWINGS

The objects, features, and advantages of the present disclosure will become more apparent from the following detailed description and the drawings.

FIG. 1 is a plan view of a liquid crystal display according to one embodiment of the present disclosure.
FIG. 2 is a cross-sectional view taken along section line II-II in FIG. 1.
FIG. 3 is a diagram describing a half-value angle of light emitted from a lens member.
FIG. 4 is a graph showing the relationship between the luminance of light emitted from a backlight and a drive current applied to each of light emitters.
FIG. 5 is a schematic diagram of a virtual image display device according to one embodiment of the present disclosure.
FIG. 6A is a photograph of a virtual image formed by a virtual image display device in an example and captured with a camera.
FIG. 6B is a graph showing a luminance profile taken along line A-B in the photograph in FIG. 6A.
FIG. 7 is a diagram illustrating the directivity of a light source used in simulation of luminance uniformity and luminance.
FIG. 8 is a diagram illustrating the arrangement of light sources and illumination surfaces in the simulation of luminance uniformity and luminance.
FIG. 9 is a cross-sectional view of a liquid crystal display according to another embodiment of the present disclosure.
FIG. 10 is a schematic diagram of a virtual image display device including the liquid crystal display in FIG. 9.
FIG. 11 is a diagram of an example virtual image viewed by a user of the virtual image display device in FIG. 10.

DESCRIPTION OF EMBODIMENTS

Various virtual image display devices have been proposed to cause a user to view image light emitted from a display as a virtual image. For a display being a liquid crystal display including a backlight and a liquid crystal panel, the virtual image display device performs local dimming control of the backlight to cause the user to view the virtual image with a higher contrast. However, when using light sources with high directivity such as light-emitting diodes (LEDs), the backlight may emit light with lower luminance uniformity, possibly causing the local dimming control to be ineffective. Patent Literature 1 describes a liquid crystal display that uses a light guide for allowing uniform luminance of light emitted from multiple point light sources to avoid lowering the luminance uniformity of light emitted from the backlight.

Known liquid crystal displays are to be improved to emit light with higher luminance and higher luminance uniformity from the backlight.

Embodiments of the present disclosure will now be described in detail with reference to the drawings. The drawings used hereafter are schematic and are not necessarily drawn to scale relative to the actual size of each component. For ease of explanation, some of the drawings are defined using the orthogonal xyz coordinate system, with a positive z-direction being upward to use the terms such as an upper surface or a lower surface. An x-direction may be referred to as a first direction. A y-direction may be referred to as a second direction. A z-direction may be referred to as a third direction. The first direction may also be referred to as a lateral direction. The second direction may also be referred to as a vertical direction.

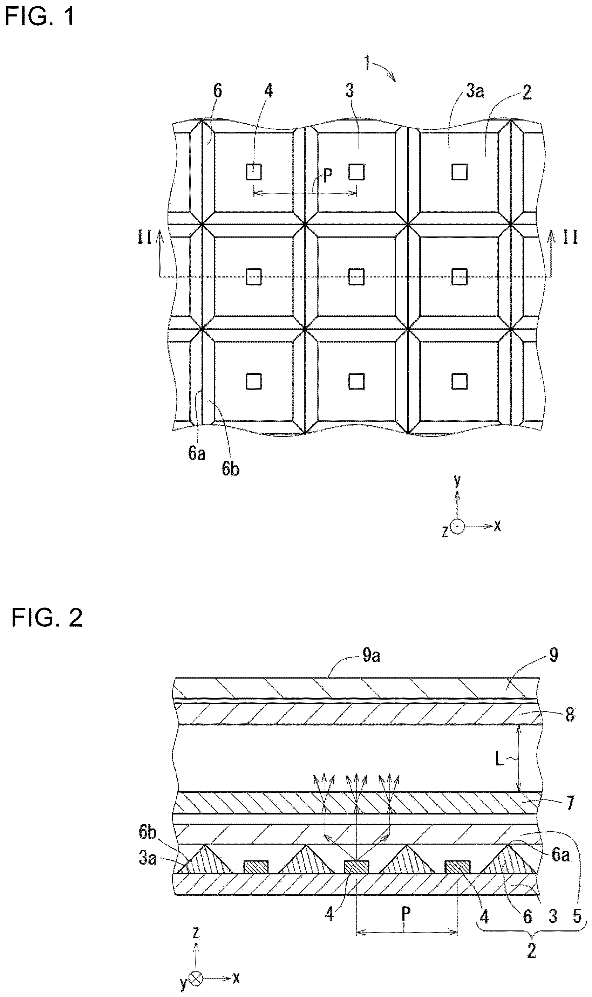

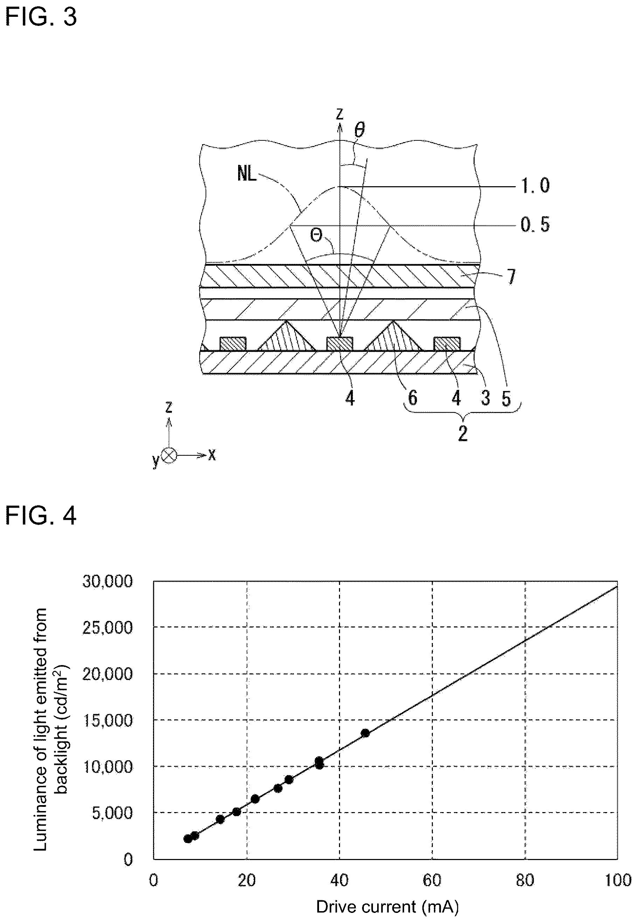

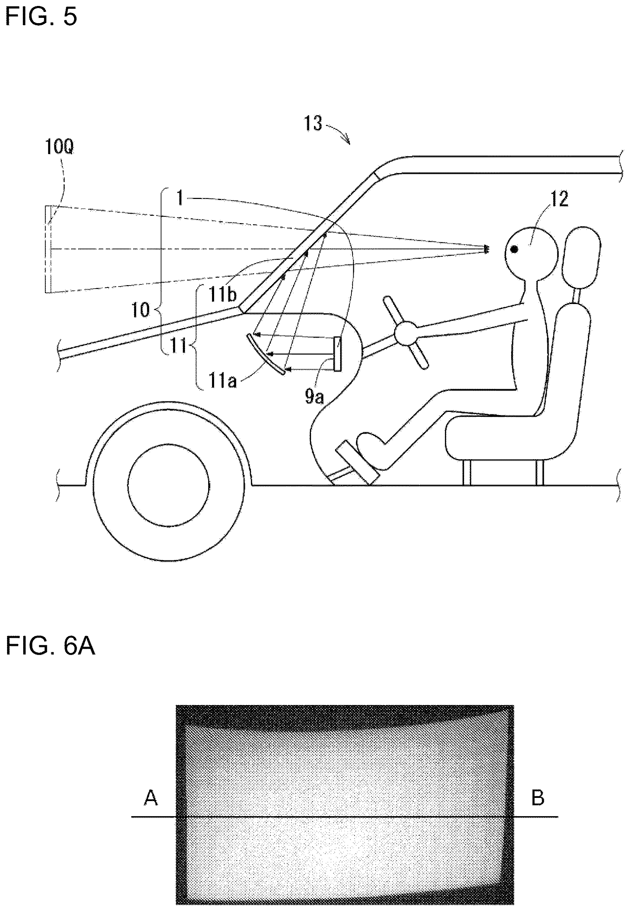

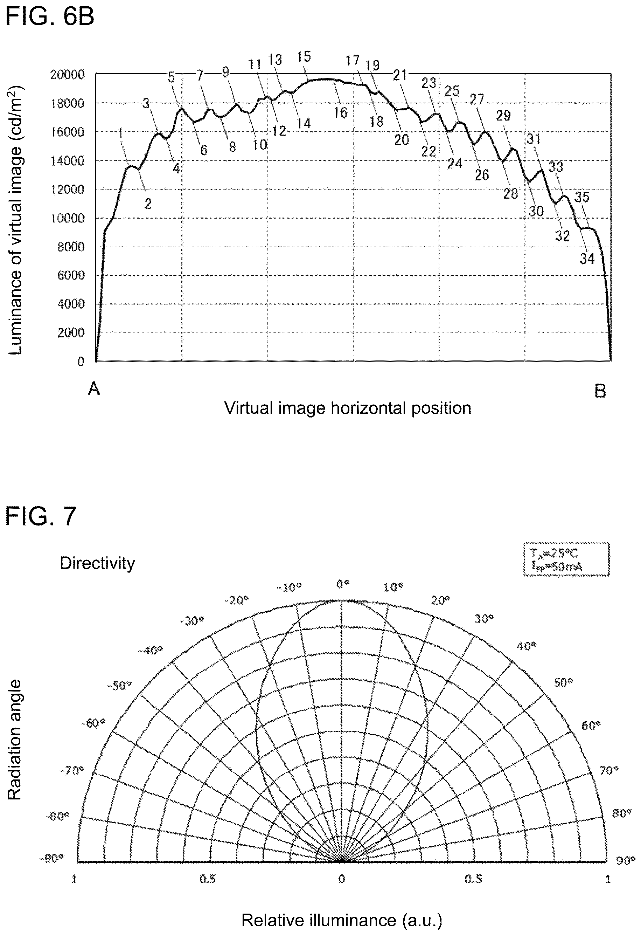

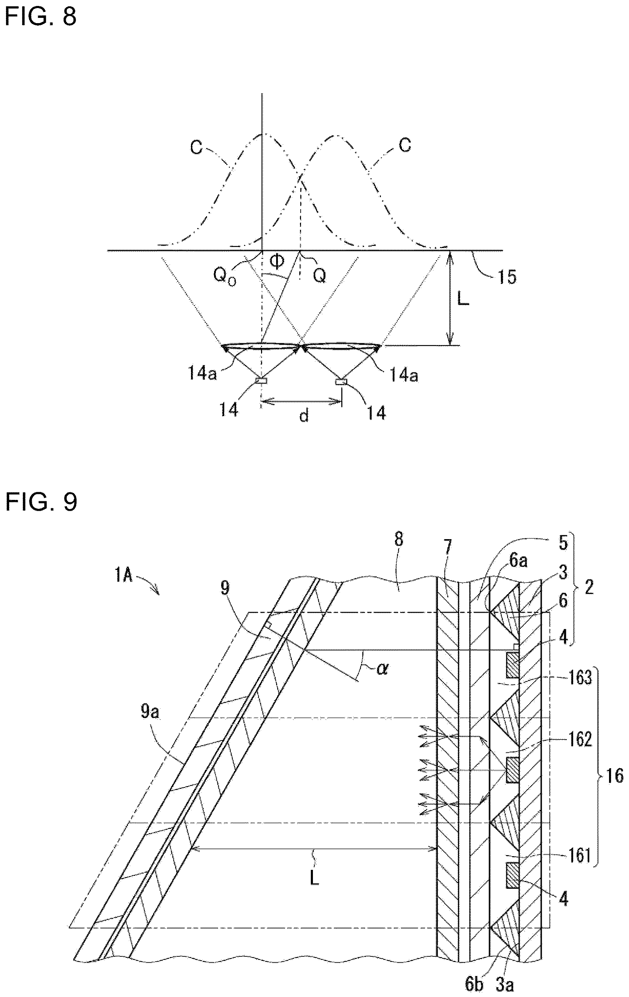

FIG. 1 is a plan view of a liquid crystal display according to one embodiment of the present disclosure. FIG. 2 is a cross-sectional view taken along section line II-II in FIG. 1. FIG. 3 is a diagram describing a half-value angle of light emitted from a lens member. FIG. 4 is a graph showing the relationship between the luminance of light emitted from a backlight and a drive current applied to each of light emitters. FIG. 5 is a schematic diagram of a virtual image display device according to one embodiment of the present disclosure. FIG. 6A is a photograph of a virtual image formed by the virtual image display device in an example and captured with a camera. FIG. 6B is a graph showing the luminance profile taken along line A-B in the photograph in FIG. 6A. FIG. 7 is a diagram illustrating the directivity of a light source used in simulation of luminance uniformity and luminance. FIG. 8 is a diagram illustrating the arrangement of light sources and illumination surfaces in the simulation of luminance uniformity and luminance. In the plan view in FIG. 1, a liquid crystal panel, a diffuser plate, a lens member, and optical members in a backlight are not illustrated.

In one embodiment of the present disclosure, a liquid crystal display 1 includes a backlight 2, a lens member 7, a diffuser plate 8, and a liquid crystal panel 9 as illustrated in FIGs. 1 and 2.

The backlight 2 includes a substrate 3 and multiple light emitters 4. The substrate 3 may be made of, for example, a glass material, a ceramic material, a resin material, a metal material, or a semiconductor material. The substrate 3 includes a first surface 3a on which the multiple light emitters 4 are arranged. The first surface 3a may be perpendicular to the third direction. As illustrated in FIG. 1, the multiple light emitters 4 are arranged in a matrix with a predetermined pitch P. Although not illustrated, the first surface 3a includes electrode pads to which the light emitters 4 are connected, and wiring conductors for driving the light emitters 4.

The substrate 3 made of a metal material or a semiconductor material may include the multiple light emitters 4 arranged on the first surface 3a with an insulating layer (not illustrated) between the light emitters 4 and the first surface 3a. The insulating layer may be made of, for example, an inorganic insulating material such as silicon oxide ($SiO_2$) or silicon nitride ($Si_3N_4$), or an organic insulating material such as an acrylic resin or a polycarbonate resin.

Each of the light emitters 4 may be, for example, a self-luminous element such as an LED, an organic LED (OLED), or a semiconductor laser diode (LD). In the example described below, the light emitter 4 is an LED. The light emitter 4 may be a mini-LED or a micro-LED. The light emitter 4 may include a white LED that emits white light. Each of the light emitters 4 may instead include a red LED that emits red light, a green LED that emits green light, and a blue LED that emits blue light.

As illustrated in FIG. 2, the backlight 2 may include an optical member 5 that collects light emitted from the multiple light emitters 4. The optical member 5 is located above the first surface 3a. The distance between the optical member 5 and the substrate 3 may be, for example, about 1 to 10 mm, or about 5 mm. The optical member 5 may include a microlens array including multiple microlenses arranged in two dimensions. Each of the microlenses may be, for example, a biconvex lens, a plano-convex lens, or a convex meniscus lens. The optical member 5 may include a combination of cylindrical lenses. The optical member 5 may have a thickness of about 0.1 to 3 mm, or about 1 mm. The optical member 5 may be a luminance-enhancing film, or more specifically, may be a prism film of the brightness enhancement film (BEF) series manufactured by Sumitomo 3M Limited. A prism sheet is an optical member that collects light using double reflection of light passing through a film and the refractivity of light. Multiple prism sheets may be stacked on one another. The prism sheets may be stacked with the ridge lines of the prisms orthogonal to one another.

As illustrated in FIGs. 1 and 2, the backlight 2 may include reflectors 6 located on the first surface 3a of the substrate 3. As illustrated in FIG. 1, the reflectors 6 are arranged in a grid to define areas, each of which includes a single light emitter 4. Each of the reflectors 6 has an upper end 6a farthest from the first surface 3a in the third direction (z-direction). The upper end 6a may be in contact with the optical member 5. This structure can reduce light emitted from light emitters 4 in an emissive state entering the areas including light emitters 4 in a non-emissive state in the liquid crystal panel during local dimming control, thus reducing the likelihood of the local dimming control being ineffective. Each of the reflectors 6 may have a light-reflective side surface 6b facing the corresponding light emitter 4. The side surface 6b of the reflector 6 may be made of a metal material such as aluminum (Al) or silver (Ag). Note that the local dimming control divides the backlight 2 into multiple blocks, and controls the luminance of each of the multiple blocks independently based on an image appearing on the liquid crystal panel 9. For a dark image appearing in an area on the liquid crystal panel 9, for example, the luminance of the block corresponding to the area is lowered to cause the dark image to appear darker. The local dimming control thus improves the display performance of the liquid crystal display 1 with a higher contrast. Light with high luminance and high luminance uniformity is incident on the liquid crystal panel 9 for more effective local dimming control, thus causing the user to view a clearer image (virtual image).

The lens member 7 anisotropically diffuses light emitted from the backlight 2. The lens member 7 has the diffusivity in the first direction (x-direction) different from the diffusivity in the second direction (y-direction), thus diffusing received light anisotropically before emitting the light. When the backlight 2 includes the optical member 5, light collected by the optical member 5 is incident on the lens member 7. The lens member 7 can thus diffuse the received light at a diffusion angle (also referred to as a light distribution angle) as designed. The diffusivity in the first direction and the diffusivity in the second direction of the lens member 7 can be determined based on the aspect ratio of a virtual image 10Q formed by a virtual image display device 10 (refer to FIG. 5). To display the virtual image 10Q in a horizontal orientation, for example, the diffusivity in the first direction is higher, and the diffusivity in the second direction is lower than the diffusivity in the first direction. In particular, the virtual image display device used in a head-up display may have higher luminance uniformity in the first direction than in the second direction. The diffusivity in the first direction is thus defined within a specific range.

The lens member 7 may be a plate or a sheet made of a transparent resin with many microlenses arranged regularly on its light incident surface. The lens member 7 may be a microlens array including multiple microlenses arranged in two dimensions. Each of the microlenses may have a diffusion peak in a specific direction, for example, in the first direction. More specifically, each of the microlenses may have a shape with a higher diffusivity in the x-direction and a lower diffusivity in the y-direction than in the x-direction. Each of the microlenses may be, for example, a biconcave lens, a plano-concave lens, or a concave meniscus lens. The lens member 7 may be in contact with or separate from the optical member 5 in the third direction. The lens member 7 may have a thickness of about 0.5 to 2 mm, or about 1 mm. The diffusivity and anisotropy of the lens member 7 are controlled by the microstructure of the microlenses. In other words, the lens member 7 with an intended anisotropic diffusivity can be obtained by controlling the pitch or height of the concave and convex of the microlenses. For an anisotropic diffusivity expressed as H20V13, for example, the diffusivity in a horizontal direction (the x-direction in the present embodiment) is 20, and the diffusivity in the vertical direction (the y-direction in the present embodiment) is 13. This indicates that the diffusivity in the x-direction differs from the diffusivity in the y-direction, and thus light is diffusible more easily in the x-direction.

The lens member 7 is configured to emit light in a direction with a higher diffusivity to have a predetermined half-value angle $\Theta$. As illustrated in FIG. 3, the half-value angle $\Theta$ refers to the width of a polar angle $\theta$ at which a normalized luminance NL is greater than or equal to 0.5 when a single light emitter 4 is in the emissive state and the normalized luminance NL of light emitted from the lens member 7 is expressed as a function of the polar angle $\theta$. The polar angle $\theta$ may be an angle formed between a propagation direction of each of partial light beams emitted from the lens member 7 and the z-axis. A smaller half-value angle $\Theta$ indicates a narrower directivity of the lens member 7. A larger half-value angle $\Theta$ indicates a wider directivity of the lens member 7.

The diffuser plate 8 diffuses light emitted from the lens member 7. The diffuser plate 8 may include, for example, a base made of a transparent resin or glass, and light-diffusing particles dispersed in the base. The light-diffusing particles may be made of, for example, a silicone resin, a polystyrene resin, silica, or calcium carbonate. The diffuser plate 8 may have a thickness of about 0.05 to 0.3 mm, or about 0.1 mm.

The diffuser plate 8 has a predetermined haze value H (%). The haze value H results from multiplying a value Td/Tt (a diffusion transmittance Td divided by a total transmittance Tt) by 100. The diffusion transmittance Td and the total transmittance Tt are measured with a known measurement method.

The liquid crystal panel 9 is located above the diffuser plate 8. The liquid crystal panel 9 includes a display surface 9a. The display surface 9a is opposite to the surface of the liquid crystal panel 9 facing the backlight 2. The liquid crystal panel 9 displays, on the display surface 9a, an image based on an image signal input from an external device using light emitted from the diffuser plate 8. In other words, the liquid crystal panel 9 emits image light through the display surface 9a based on an image signal input from the external device. The display surface 9a of the liquid crystal panel 9 also serves as the display surface 9a of the liquid crystal display 1.

The liquid crystal panel 9 may be a known liquid crystal panel. Examples of the known liquid crystal panel include an in-plane switching (IPS) panel, a fringe field switching (FFS) panel, a vertical alignment (VA) panel, and an electrically controlled birefringence (ECB) panel.

The liquid crystal display 1 includes a controller (not illustrated). The controller controls the backlight 2 and the liquid crystal panel 9. The controller may switch each of the multiple light emitters 4 between the emissive state and the non-emissive state based on the image appearing on the liquid crystal panel 9. For the liquid crystal display 1 included in a virtual image display device, the controller may control the emission luminance of the light emitter 4 switched to the emissive state based on the background luminance of the field of view of the user. This increases the luminance and the contrast of a virtual image viewed by the user.

The controller may be, for example, a processor. The controller may include one or more processors. The processors may include a general-purpose processor that reads a specific program to perform a specific function, and a processor dedicated to specific processing. The dedicated processor may include an application-specific integrated circuit (ASIC). The processor may include a programmable logic device (PLD). The PLD may include a field-programmable gate array (FPGA). The controller may be a system on a chip (SoC) or a system in a package (SiP) in which one or more processors cooperate with one another. The controller may include a storage that may store, for example, various items of information or programs for causing each of the components of the liquid crystal display 1 to operate. The storage may be, for example, a semiconductor memory. The storage may serve as a storage area temporarily used during data processing performed by the controller.

The liquid crystal display 1 has a distance L between the lens member 7 and the diffuser plate 8 of 0 to 72 mm inclusive based on the half-value angle Θ of light emitted from the lens member 7, the haze value H of the diffuser plate 8, and the pitch P. The liquid crystal display 1 thus allows light with higher luminance uniformity to be incident on the liquid crystal panel 9, allowing more effective local dimming control. The liquid crystal display 1 with the distance L defined based on the half-value angle Θ, the haze value H, and the pitch P allows light with higher luminance and higher luminance uniformity to be incident on the liquid crystal panel 9 for more effective local dimming control.

The luminance uniformity (%) in the luminance distribution of light emitted from the diffuser plate 8 (or light incident on the liquid crystal panel 9) is herein defined as a value resulting from multiplying a value having a greater deviation from 1, of the value Ib/Ia (Ib divided by Ia) and the value Ic/Ia (Ic divided by Ia), by100, where Ia is the maximum luminance at a position immediately above the light emitter 4, Ib is the maximum luminance at a position other than immediately above the light emitter 4, and Ic is the minimum luminance at a position other than immediately above the light emitter 4. Thus, the luminance uniformity may be less than 100% or greater than 100%. The luminance uniformity (%) closer to 100% indicates that light incident on the liquid crystal panel 9 has more uniform luminance.

The distance L between the lens member 7 and the diffuser plate 8 is within the range of 0 to 72 mm. When the distance L is relatively small (e.g., about 0 to 36 mm), the areas including light emitters 4 in the non-emissive state in the liquid crystal panel 9 are less likely to receive light emitted from light emitters 4 in the emissive state during local dimming control. This can increase the contrast. With the distance L set to a relatively small value, the liquid crystal display 1 can be downsized. With the distance L set to a relatively large value (e.g., about 36 to 72 mm), the distance between the backlight 2 and the liquid crystal panel 9 is large. This structure reduces the likelihood that the liquid crystal molecules included in the liquid crystal panel 9 have their orientations uncontrollable under heat generated in the backlight 2. This improves the reliability of the liquid crystal display 1.

Increasing the half-value angle Θ of the lens member 7 allows light with higher luminance uniformity to be incident on the liquid crystal panel 9. However, the light incident on the liquid crystal panel 9 tends to have lower luminance. The half-value angle Θ may be 20 to 39° inclusive. This structure allows light with higher luminance and higher luminance uniformity to be incident on the liquid crystal panel 9. This allows more effective local dimming control. The luminance uniformity and the dependency of luminance on the half-value angle Θ of light incident on the liquid crystal panel 9 can be referred to in an example described later.

Increasing the haze value H of the diffuser plate 8 allows light with higher luminance uniformity to be incident on the liquid crystal panel 9. However, the light incident on the liquid crystal panel 9 tends to have lower luminance. The haze value H may be 35 to 76% inclusive. This structure allows light with higher luminance and higher luminance uniformity to be incident on the liquid crystal panel 9. This allows more effective local dimming control. The luminance uniformity and the dependency of luminance on the haze value H of light incident on the liquid crystal panel 9 can be referred to in the example described later.

The multiple light emitters 4 may be arranged at a pitch P of 4 to 6 mm inclusive. In this case, the number of light emitters 4, or in other words, the number of areas in which light emitted from the backlight 2 can be controlled individually, can be increased to the effective number for the local dimming control. This allows more effective local dimming control.

A virtual image display device according to one embodiment of the present disclosure will now be described. The virtual image display device 10 according to the present embodiment is also referred to as a head-up display (HUD). The virtual image display device 10 may be mounted on a movable body 13. The movable body 13 includes a vehicle, a vessel, and an aircraft. The vehicle includes, but is not limited to, an automobile or an industrial vehicle, and may also include a railroad vehicle, a community vehicle, and a fixed-wing aircraft traveling on a runway. The automobile includes, but is not limited to, a passenger vehicle, a truck, a bus, a motorcycle, and a trolley bus, and may also include another vehicle traveling on a road. The industrial vehicle includes an industrial vehicle for agriculture and an industrial vehicle for construction. The industrial vehicle includes, but is not limited to, a forklift and a golf cart. The industrial vehicle for agriculture includes, but is not limited to, a tractor, a cultivator, a transplanter, a binder, a combine, and a lawn mower. The industrial vehicle for construction includes, but is not limited to, a bulldozer, a scraper, a power shovel, a crane vehicle, a dump truck, and a road roller. The vehicle includes a human-powered vehicle. The classification of the vehicle is not limited to the above. For example, the automobile may include an industrial vehicle traveling on a road, and one type of vehicle may fall within multiple classes. In one or more embodiments of the present disclosure, the vessel includes a jet ski, a boat, and a tanker. In one or more embodiments of the present disclosure, the aircraft includes a fixed-wing aircraft and a rotary-wing aircraft.

As illustrated in FIG. 5, the virtual image display device 10 includes the liquid crystal display 1 and an optical system 11. The optical system 11 causes the user 12 to view image light emitted from the display surface 9a of the liquid crystal display 1 as the virtual image 10Q. The optical system 11 is located on an optical path of image light emitted from the liquid crystal display 1 and reaching the eyes of the user 12. The optical system 11 may enlarge or reduce the image appearing on the display surface 9a of the liquid crystal display 1 to form an image in the eyes of the user 12. As illustrated in FIG. 5, the optical system 11 includes a first optical member 11a and a second optical member 11b. The optical system 11 may include one optical member or three or more optical members, rather than two optical members. For the virtual image display device 10 mounted on the movable body 13, the windshield of the movable body 13 may also serve as the second optical member 11b. The optical members included in the optical system 11 may include a reflective member including a convex mirror or a concave mirror, or may include a refractive member including a convex lens or a concave lens. The convex lens includes a biconvex lens, a plano-convex lens, and a convex meniscus lens. The concave lens includes a biconcave lens, a plano-concave lens, and a concave meniscus lens. The optical members included in the optical system 11 may include various optical members other than the reflective member or the refractive member.

The virtual image display device 10 including the liquid crystal display 1 can cause the user 12 to view the virtual image 10Q with a high contrast and high luminance. The virtual image display device 10 can thus cause the user 12 to view the virtual image 10Q independently of the time period (e.g., daytime or nighttime) or the surrounding weather (e.g., sunny, cloudy, rainy, or snowy).

The virtual image display device 10 may be configured to cause the user 12 to view a stereoscopic image. The liquid crystal display 1 may display, on the display surface 9a of the liquid crystal panel 9, a composite image including a left eye image and a right eye image having parallax with respect to the left eye image. The virtual image display device 10 may include an optical element that splits image light emitted from the display surface 9a of the liquid crystal panel 9 into left-eye image light for a left eye image and right-eye image light for a right eye image. The optical element may include a parallax barrier or a lenticular lens. The parallax barrier may include a liquid crystal panel.

Example

To verify the effectiveness of the liquid crystal display 1, the luminance uniformity and the luminance of light incident on the liquid crystal panel 9 were calculated through simulation. The backlight 2 includes 220 light emitters 4 arranged in a matrix in 10 rows and 22 columns in an area with a diagonal of 4.1 inches on the first surface 3a. The reflector 6 has a height of 5 mm from the first surface 3a to the upper end 6a. The optical member 5 is a microlens array with a thickness of 1 mm. The optical member 5 is at a distance of 5 mm from the substrate 3. The lens member 7 is a microlens array with a thickness of 1 mm. The lens member 7 is at a distance of 0 mm from the optical member 5, or in other words, the lens member 7 is in contact with the optical member 5. The diffuser plate 8 has a thickness of 0.1 mm, and is at the distance L from the lens member 7.

The inventors calculated luminance uniformity and luminance using simulation software developed by the inventors. The simulation software was created with reference to FIGs. 7 and 8. FIG. 7 illustrates the emission angle characteristics of NSPWR70CSS-K1 (hereafter referred to as a light source 14) manufactured by Nichia Corp. The characteristics in FIG. 7 can be used to calculate the ratio of energy emitted in each angle from the light source 14. FIG. 8 is a diagram illustrating the arrangement of light sources 14 and an illumination surface 15 in the simulation. A pitch d between the adjacent light sources 14 may be calculated based on an emission angle characteristic C of the light source 14 and a distance L between a light source surface 14a of each of the light sources 14 and the illumination surface 15 with the arrangement illustrated in FIG. 8. In FIG. 8, $Q_0$ indicates the position at which the illuminance distribution has a peak value in the illumination surface 15, and Q indicates the position at which the illuminance distributions of the adjacent light sources 14 overlap each other.

When each of the light sources 14 illustrated in FIG. 8 is a light source for a perfect diffuse surface and the illumination surface 15 facing each of the light sources 14 and being parallel to the light source surface 14a of each of the light sources 14 is illuminated, an illuminance $E_0$ in an area dQ of the illumination surface 15 satisfies Formula 1, where B is the luminance of the light source 14.

$$E_0 = B \cdot (dQ/L^2) \cdot ds \cdot (1/dQ) = B \cdot (ds/L^2) \qquad (1)$$

In Formula 1, d is the pitch between the adjacent light sources 14, and ds is the area size of the light source surface 14a. The illuminance E of the illumination surface 15 in a direction forming an angle $\Phi$ with the light source surface 14a of the light source 14 appears compressed by $(\cos\Phi)$ from the direction $\Phi$, thus satisfying the relational expression of Formula 2.

$$E = B \cdot \{dQ\cos\Phi/(L/\cos\Phi)^2\} \cdot ds \cdot \cos\Phi \cdot (1/dQ)$$

$$= B \cdot (ds/L^2) \cdot \cos^4\Phi \qquad (2)$$

Thus, the relationship holds as in Formula 3.

$$E = E_0 \cos^4 \Phi \qquad (3)$$

When the light source 14 is not a light source for a perfect diffuse surface but a light source with the ratio of the luminous intensity $I_\Phi$ to the luminous intensity $I_0$ being the ratio expressed in Formula 4, the relational expression of Formula 5 can be derived. In Formula 4, the luminous intensity $I_\Phi$ is in a direction of the angle $\Phi$ with respect to the normal to the light source surface 14a, and the luminous intensity $I_0$ is in a center direction.

$$I(\Phi) = I_\Phi/I_0 \qquad (4)$$

$$E_0 = kI_0 \cdot (dQ/L_2)ds \cdot (1/dQ)$$
$$= kI_0 \cdot (ds/L^2) \qquad (5)$$

In Formula 5, k is a proportionality constant. The illuminance E of the illumination surface 15 in a direction forming the angle $\Phi$ with the light source surface 14a satisfies Formula 6.

$$E = kI_\Phi \cdot \{dQ\cos\Phi/(L/\cos\Phi)^2\} \cdot ds \cdot (1/dQ)$$
$$= kI_\Phi \cdot (ds/L^2) \cdot \cos^3 \Phi \qquad (6)$$

Formula 7 is derived from Formulas 5 and 6.

$$E = E_0 \cdot I(\Phi) \cdot \cos^3 \Phi \qquad (7)$$

Simulation data was generated by fitting the distribution illustrated in FIG. 7 to $I(\Phi)$ in Formula 7.

Table 1

| L | Simulation No. | | | | | | | | | | | | | | | | | |
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
|---|---|---|---|---|---|---|---|---|---|---|---|---|---|---|---|---|---|---|
| 0 | 71.4% | 34650 | 80.8% | 32415 | 81.9% | 24335 | 79.5% | 27438 | 80.3% | 26902 | 86.1% | 20277 | 96.6% | 12578 | 97.0% | 12291 | 97.3% | 10256 |
| 1 | 72.0% | 34229 | 81.2% | 31989 | 82.2% | 23979 | 80.1% | 27062 | 80.8% | 26498 | 86.5% | 19952 | 97.2% | 12389 | 97.5% | 12092 | 97.8% | 10078 |
| 2 | 72.5% | 33808 | 81.5% | 31563 | 82.6% | 23623 | 80.6% | 26686 | 81.4% | 26093 | 86.9% | 19627 | 97.7% | 12200 | 98.0% | 11893 | 98.3% | 9900 |
| 3 | 73.0% | 33388 | 81.8% | 31136 | 82.9% | 23267 | 81.2% | 26311 | 81.9% | 25689 | 87.3% | 19303 | 98.3% | 12011 | 98.6% | 11693 | 98.9% | 9722 |
| 4 | 73.6% | 32967 | 82.2% | 30710 | 83.3% | 22911 | 81.8% | 25935 | 82.4% | 25285 | 87.7% | 18978 | 98.8% | 11822 | 99.1% | 11494 | 99.4% | 9544 |
| 5 | 74.1% | 32546 | 82.5% | 30284 | 83.6% | 22555 | 82.3% | 25559 | 83.0% | 24880 | 88.1% | 18653 | 99.3% | 11633 | 99.6% | 11295 | 100.0% | 9366 |
| 6 | 74.7% | 32125 | 82.8% | 29858 | 83.9% | 22199 | 82.9% | 25183 | 83.5% | 24476 | 88.5% | 18328 | 99.9% | 11443 | 100.2% | 11096 | 100.5% | 9187 |
| 7 | 75.2% | 31704 | 83.1% | 29432 | 84.3% | 21843 | 83.4% | 24808 | 84.1% | 24072 | 89.0% | 18004 | 100.4% | 11254 | 100.7% | 10896 | 101.0% | 9009 |
| 8 | 75.7% | 31284 | 83.5% | 29005 | 84.6% | 21487 | 84.0% | 24432 | 84.6% | 23667 | 89.4% | 17679 | 101.0% | 11065 | 101.2% | 10697 | 101.6% | 8831 |
| 9 | 76.3% | 30863 | 83.8% | 28579 | 85.0% | 21131 | 84.6% | 24056 | 85.1% | 23263 | 89.8% | 17354 | 101.5% | 10876 | 101.7% | 10498 | 102.1% | 8653 |
| 10 | 76.8% | 30442 | 84.1% | 28153 | 85.3% | 20775 | 85.1% | 23680 | 85.7% | 22859 | 90.2% | 17029 | 102.0% | 10687 | 102.3% | 10299 | 102.7% | 8475 |
| 11 | 77.4% | 30021 | 84.5% | 27727 | 85.6% | 20419 | 85.7% | 23304 | 86.2% | 22454 | 90.6% | 16705 | 102.6% | 10498 | 102.8% | 10099 | 103.2% | 8297 |
| 12 | 77.9% | 29600 | 84.8% | 27301 | 86.0% | 20063 | 86.2% | 22929 | 86.8% | 22050 | 91.0% | 16380 | 103.1% | 10309 | 103.3% | 9900 | 103.7% | 8119 |
| 13 | 78.4% | 29180 | 85.1% | 26875 | 86.3% | 19706 | 86.8% | 22553 | 87.3% | 21646 | 91.4% | 16055 | 103.7% | 10120 | 103.9% | 9701 | 104.3% | 7941 |
| 14 | 79.0% | 28759 | 85.5% | 26448 | 86.7% | 19350 | 87.4% | 22177 | 87.8% | 21241 | 91.8% | 15730 | 104.2% | 9931 | 104.4% | 9502 | 104.8% | 7763 |
| 15 | 79.5% | 28338 | 85.8% | 26022 | 87.0% | 18994 | 87.9% | 21801 | 88.4% | 20837 | 92.2% | 15405 | 104.7% | 9742 | 104.9% | 9303 | 105.4% | 7585 |
| 16 | 80.1% | 27917 | 86.1% | 25596 | 87.3% | 18638 | 88.5% | 21426 | 88.9% | 20433 | 92.6% | 15081 | 105.3% | 9553 | 105.5% | 9103 | 105.9% | 7407 |

(continued)

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 1-7 | 80.6% | 27496 | 86.4% | 25170 | 87.7% | 18282 | 89.0% | 21050 | 89.5% | 20028 | 93.1% | 14756 | 105.8% | 9363 | 106.0% | 8904 | 106.4% | 7228 |
| 1-8 | 81.1% | 27076 | 86.8% | 24744 | 88.0% | 17926 | 89.6% | 20674 | 90.0% | 19624 | 93.5% | 14431 | 106.4% | 9174 | 106.5% | 8705 | 107.0% | 7050 |
| 1-9 | 81.7% | 26655 | 87.1% | 24317 | 88.4% | 17570 | 90.2% | 20298 | 90.5% | 19220 | 93.9% | 14106 | 106.9% | 8985 | 107.0% | 8506 | 107.5% | 6872 |
| 2-0 | 82.2% | 26234 | 87.4% | 23891 | 88.7% | 17214 | 90.7% | 19922 | 91.1% | 18815 | 94.3% | 13782 | 107.4% | 8796 | 107.6% | 8306 | 108.1% | 6694 |
| 2-1 | 82.8% | 25813 | 87.8% | 23465 | 89.0% | 16858 | 91.3% | 19547 | 91.6% | 18411 | 94.7% | 13457 3457 | 108.0% | 8607 | 108.1% | 8107 | 108.6% | 6516 |
| 2-2 | 83.3% | 25392 | 88.1% | 23039 | 89.4% | 16502 | 91.8% | 19171 | 92.2% | 18007 | 95.1% | 13132 | 108.5% | 8418 | 108.6% | 7908 | 109.1% | 6338 |
| 2-3 | 83.8% | 24972 | 88.4% | 22613 | 89.7% | 16146 | 92.4% | 18795 | 92.7% | 17602 | 95.5% | 12807 | 109.1% | 8229 | 109.2% | 7709 | 109.7% | 6160 |
| 2-4 | 84.4% | 24551 | 88.8% | 22186 | 90.1% | 15790 | 93.0% | 18419 | 93.2% | 17198 | 95.9% | 12483 | 109.6% | 8040 | 109.7% | 7509 | 110.2% | 5982 |
| 2-5 | 84.9% | 24130 | 89.1% | 21760 | 90.4% | 15434 | 93.5% | 18044 | 93.8% | 16794 | 96.3% | 12158 | 110.1% | 7851 | 110.2% | 7310 | 110.8% | 5804 |
| 2-6 | 85.5% | 23709 | 89.4% | 21334 | 90.7% | 15078 | 94.1% | 17668 | 94.3% | 16389 | 96.7% | 11833 | 110.7% | 7662 | 110.8% | 7111 | 111.3% | 5626 |
| 2-7 | 86.0% | 23288 | 89.7% | 20908 | 91.1% | 14722 | 94.6% | 17292 | 94.9% | 15985 | 97.2% | 11508 | 111.2% | 7473 | 111.3% | 6912 | 111.8% | 5448 |
| 2-8 | 86.5% | 22868 | 90.1% | 20482 | 91.4% | 14366 | 95.2% | 16916 | 95.4% | 15580 | 97.6% | 11183 | 111.8% | 7283 | 111.8% | 6713 | 112.4% | 5269 |
| 2-9 | 87.1% | 22447 | 90.4% | 20055 | 91.8% | 14010 | 95.8% | 16540 | 95.9% | 15176 | 98.0% | 10859 | 112.3% | 7094 | 112.3% | 6513 | 112.9% | 5091 |
| 3-0 | 87.6% | 22026 | 90.7% | 19629 | 92.1% | 13654 | 96.3% | 16165 | 96.5% | 14772 | 98.4% | 10534 | 112.8% | 6905 | 112.9% | 6314 | 113.5% | 4913 |

(continued)

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 3-1 | 88.2% | 21605 | 91.1% | 19203 | 92.4% | 13298 | 96.9% | 15789 | 97.0% | 14367 | 98.8% | 10209 | 113.4% | 6716 | 113.4% | 6115 | 114.0% | 4735 |
| 3-2 | 88.7% | 21184 | 91.4% | 18777 | 92.8% | 12942 | 97.4% | 15413 | 97.6% | 13963 | 99.2% | 9884 | 113.9% | 6527 | 113.9% | 5916 | 114.5% | 4557 |
| 3-3 | 89.2% | 20764 | 91.7% | 18351 | 93.1% | 12586 | 98.0% | 15037 | 98.1% | 13559 | 99.6% | 9560 | 114.5% | 6338 | 114.5% | 5716 | 115.1% | 4379 |
| 3-4 | 89.8% | 20343 | 92.1% | 17925 | 93.5% | 12230 | 98.6% | 14661 | 98.6% | 13154 | 100.0% | 9235 | 115.0% | 6149 | 115.0% | 5517 | 115.6% | 4201 |
| 3-5 | 90.3% | 19922 | 92.4% | 17498 | 93.8% | 11874 | 99.1% | 14286 | 99.2% | 12750 | 100.4% | 8910 | 115.5% | 5960 | 115.5% | 5318 | 116.2% | 4023 |
| 3-6 | 90.9% | 19501 | 92.7% | 17072 | 94.1% | 11518 | 99.7% | 13910 | 99.7% | 12346 | 100.8% | 8585 | 116.1% | 5771 | 116.1% | 5119 | 116.7% | 3845 |

EP 4 668 008 A1

10

Table 2

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance |
| 3-7 | 91.4% | 19080 | 93.0% | 16646 | 94.5% | 11162 | 100.2% | 13534 | 100.3% | 11941 | 101.3% | 8261 | 116.6% | 5582 | 116.6% | 4919 | 117.2% | 3667 |
| 3-8 | 91.9% | 18660 | 93.4% | 16220 | 94.8% | 10805 | 100.8% | 13158 | 100.8% | 11537 | 101.7% | 7936 | 117.2% | 5393 | 117.1% | 4720 | 117.8% | 3489 |
| 3-9 | 92.5% | 18239 | 93.7% | 15794 | 95.2% | 10449 | 101.4% | 12783 | 101.3% | 11133 | 102.1% | 7611 | 117.7% | 5203 | 117.6% | 4521 | 118.3% | 3310 |
| 4-0 | 93.0% | 17818 | 94.0% | 15367 | 95.5% | 10093 | 101.9% | 12407 | 101.9% | 10728 | 102.5% | 7286 | 118.2% | 5014 | 118.2% | 4322 | 118.9% | 3132 |
| 4-1 | 93.6% | 17397 | 94.4% | 14941 | 95.8% | 9737 | 102.5% | 12031 | 102.4% | 10324 | 102.9% | 6961 | 118.8% | 4825 | 118.7% | 4123 | 119.4% | 2954 |
| 4-2 | 94.1% | 16976 | 94.7% | 14515 | 96.2% | 9381 | 103.0% | 11655 | 103.0% | 9920 | 103.3% | 6637 | 119.3% | 4636 | 119.2% | 3923 | 119.9% | 2776 |
| 4-3 | 94.6% | 16556 | 95.0% | 14089 | 96.5% | 9025 | 103.6% | 11279 | 103.5% | 9515 | 103.7% | 6312 | 119.9% | 4447 | 119.8% | 3724 | 120.5% | 2598 |
| 4-4 | 95.2% | 16135 | 95.4% | 13663 | 96.9% | 8669 | 104.2% | 10904 | 104.0% | 9111 | 104.1% | 5987 | 120.4% | 4258 | 120.3% | 3525 | 121.0% | 2420 |
| 4-5 | 95.7% | 15714 | 95.7% | 13236 | 97.2% | 8313 | 104.7% | 10528 | 104.6% | 8707 | 104.5% | 5662 | 120.9% | 4069 | 120.8% | 3326 | 121.6% | 2242 |
| 4-6 | 96.3% | 15293 | 96.0% | 12810 | 97.5% | 7957 | 105.3% | 10152 | 105.1% | 8302 | 104.9% | 5338 | 121.5% | 3880 | 121.4% | 3126 | 122.1% | 2064 |
| 4-7 | 96.8% | 14872 | 96.3% | 12384 | 97.9% | 7601 | 105.8% | 9776 | 105.7% | 7898 | 105.4% | 5013 | 122.0% | 3691 | 121.9% | 2927 | 122.6% | 1886 |
| 4-8 | 97.3% | 14452 | 96.7% | 11958 | 98.2% | 7245 | 106.4% | 9401 | 106.2% | 7494 | 105.8% | 4688 | 122.6% | 3502 | 122.4% | 2728 | 123.2% | 1708 |
| 4-9 | 97.9% | 14031 | 97.0% | 11532 | 98.6% | 6889 | 107.0% | 9025 | 106.7% | 7089 | 106.2% | 4363 | 123.1% | 3313 | 122.9% | 2529 | 123.7% | 1530 |

EP 4 668 008 A1

(continued)

| | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| L | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 5-0 | 98.4% | 13610 | 97.3% | 11106 | 98.9% | 6533 | 107.5% | 8649 | 107.3% | 6685 | 106.6% | 4039 | 123.6% | 3124 | 123.5% | 2330 | 124.3% | 1352 |
| 5-1 | 99.0% | 13189 | 97.7% | 10679 | 99.2% | 6177 | 108.1% | 8273 | 107.8% | 6281 | 107.0% | 3714 | 124.2% | 2934 | 124.0% | 2130 | 124.8% | 1173 |
| 5-2 | 99.5% | 12768 | 98.0% | 10253 | 99.6% | 5821 | 108.6% | 7897 | 108.4% | 5876 | 107.4% | 3389 | 124.7% | 2745 | 124.5% | 1931 | 125.3% | 995 |
| 5-3 | 100.0% | 12348 | 98.3% | 9827 | 99.9% | 5465 | 109.2% | 7522 | 108.9% | 5472 | 107.8% | 3064 | 125.3% | 2556 | 125.1% | 1732 | 125.9% | 817 |
| 5-4 | 100.6% | 11927 | 98.7% | 9401 | 100.3% | 5109 | 109.8% | 7146 | 109.4% | 5068 | 108.2% | 2739 | 125.8% | 2367 | 125.6% | 1533 | 126.4% | 639 |
| 5-5 | 101.1% | 11506 | 99.0% | 8975 | 100.6% | 4753 | 110.3% | 6770 | 110.0% | 4663 | 108.6% | 2415 | 126.3% | 2178 | 126.1% | 1333 | 127.0% | 461 |
| 5-6 | 101.7% | 11085 | 99.3% | 8548 | 100.9% | 4397 | 110.9% | 6394 | 110.5% | 4259 | 109.0% | 2090 | 126.9% | 1989 | 126.7% | 1134 | 127.5% | 283 |
| 5-7 | 102.2% | 10664 | 99.6% | 8122 | 101.3% | 4041 | 111.4% | 6019 | 111.1% | 3855 | 109.5% | 1765 | 127.4% | 1800 | 127.2% | 935 | 128.0% | 105 |
| 5-8 | 102.7% | 10244 | 100.0% | 7696 | 101.6% | 3685 | 112.0% | 5643 | 111.6% | 3450 | 109.9% | 1440 | 128.0% | 1611 | 127.7% | 736 | | |
| 5-9 | 103.3% | 9823 | 100.3% | 7270 | 102.0% | 3329 | 112.6% | 5267 | 112.1% | 3046 | 110.3% | 1116 | 128.5% | 1422 | 128.2% | 536 | | |
| 6-0 | 103.8% | 9402 | 100.6% | 6844 | 102.3% | 2973 | 113.1% | 4891 | 112.7% | 2642 | 110.7% | 791 | 129.0% | 1233 | 128.8% | 337 | | |
| 6-1 | 104.4% | 8981 | 101.0% | 6417 | 102.6% | 2617 | 113.7% | 4515 | 113.2% | 2237 | 111.1% | 466 | 129.6% | 1044 | 129.3% | 138 | | |
| 6-2 | 104.9% | 8560 | 101.3% | 5991 | 103.0% | 2261 | 114.2% | 4140 | 113.8% | 1833 | 111.5% | 141 | 130.1% | 854 | | | | |
| 6-3 | 105.4% | 8140 | 101.6% | 5565 | 103.3% | 1904 | 114.8% | 3764 | 114.3% | 1429 | | | 130.7% | 665 | | | | |

(continued)

Simulation No.

| L | 1 Luminance uniformity | 1 Luminance | 2 Luminance uniformity | 2 Luminance | 3 Luminance uniformity | 3 Luminance | 4 Luminance uniformity | 4 Luminance | 5 Luminance uniformity | 5 Luminance | 6 Luminance uniformity | 6 Luminance | 7 Luminance uniformity | 7 Luminance | 8 Luminance uniformity | 8 Luminance | 9 Luminance uniformity | 9 Luminance |
|---|---|---|---|---|---|---|---|---|---|---|---|---|---|---|---|---|---|---|
| 6-4 | 106.0% | 7719 | 102.0% | 5139 | 103.7% | 1548 | 115.4% | 3388 | 114.8% | 1024 | | | 131.2% | 476 | | | | |
| 6-5 | 106.5% | 7298 | 102.3% | 4713 | 104.0% | 1192 | 115.9% | 3012 | 115.4% | 620 | | | 131.7% | 287 | | | | |
| 6-6 | 107.1% | 6877 | 102.6% | 4286 | 104.3% | 836 | 116.5% | 2637 | 115.9% | 216 | | | 132.3% | 98 | | | | |
| 6-7 | 107.6% | 6456 | 102.9% | 3860 | 104.7% | 480 | 117.0% | 2261 | | | | | | | | | | |
| 6-8 | 108.1% | 6036 | 103.3% | 3434 | 105.0% | 124 | 117.6% | 1885 | | | | | | | | | | |
| 6-9 | 108.7% | 5615 | 103.6% | 3008 | 105.4% | | 118.2% | 1509 | | | | | | | | | | |
| 7-0 | 109.2% | 5194 | 103.9% | 2582 | 105.7% | | 118.7% | 1133 | | | | | | | | | | |
| 7-1 | 109.8% | 4773 | 104.3% | 2156 | 106.0% | | 119.3% | 758 | | | | | | | | | | |
| 7-2 | 110.3% | 4352 | 104.6% | 1729 | 106.4% | | 119.8% | 382 | | | | | | | | | | |

Table 3

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 0 | 56.1% | 33188 | 65.9% | 30643 | 70.3% | 22907 | 70.3% | 25492 | 72.3% | 24881 | 78.0% | 18796 | 90.9% | 11786 | 91.6% | 11561 | 92.1% | 9674 |
| 1 | 56.8% | 32776 | 66.5% | 30237 | 70.8% | 22571 | 71.0% | 25145 | 73.0% | 24510 | 78.5% | 18497 | 91.5% | 11613 | 92.2% | 11377 | 92.7% | 9508 |
| 2 | 57.6% | 32365 | 67.0% | 29830 | 71.2% | 22235 | 71.7% | 24799 | 73.6% | 24139 | 79.0% | 18197 | 92.1% | 11440 | 92.8% | 11192 | 93.3% | 9342 |
| 3 | 58.3% | 31953 | 67.5% | 29424 | 71.7% | 21898 | 72.3% | 24452 | 74.2% | 23767 | 79.5% | 17898 | 92.7% | 11267 | 93.4% | 11008 | 93.8% | 9176 |
| 4 | 59.1% | 31542 | 68.0% | 29018 | 72.2% | 21562 | 73.0% | 24105 | 74.8% | 23396 | 80.0% | 17598 | 93.3% | 11094 | 93.9% | 10824 | 94.4% | 9011 |
| 5 | 59.8% | 31130 | 68.6% | 28611 | 72.6% | 21226 | 73.7% | 23759 | 75.4% | 23025 | 80.5% | 17299 | 93.9% | 10921 | 94.5% | 10639 | 95.0% | 8845 |
| 6 | 60.6% | 30719 | 69.1% | 28205 | 73.1% | 20890 | 74.4% | 23412 | 76.1% | 22654 | 81.0% | 16999 | 94.5% | 10747 | 95.1% | 10455 | 95.6% | 8679 |
| 7 | 61.3% | 30307 | 69.6% | 27799 | 73.5% | 20554 | 75.0% | 23065 | 76.7% | 22283 | 81.5% | 16700 | 95.1% | 10574 | 95.7% | 10270 | 96.2% | 8513 |
| 8 | 62.1% | 29895 | 70.2% | 27392 | 74.0% | 20217 | 75.7% | 22719 | 77.3% | 21912 | 82.1% | 16401 | 95.7% | 10401 | 96.3% | 10086 | 96.7% | 8347 |
| 9 | 62.8% | 29484 | 70.7% | 26986 | 74.5% | 19881 | 76.4% | 22372 | 77.9% | 21540 | 82.6% | 16101 | 96.3% | 10228 | 96.8% | 9902 | 97.3% | 8181 |
| 10 | 63.6% | 29072 | 71.2% | 26580 | 74.9% | 19545 | 77.0% | 22025 | 78.5% | 21169 | 83.1% | 15802 | 96.9% | 10055 | 97.4% | 9717 | 97.9% | 8015 |
| 11 | 64.3% | 28661 | 71.8% | 26173 | 75.4% | 19209 | 77.7% | 21679 | 79.2% | 20798 | 83.6% | 15502 | 97.5% | 9882 | 98.0% | 9533 | 98.5% | 7849 |
| 12 | 65.1% | 28249 | 72.3% | 25767 | 75.8% | 18872 | 78.4% | 21332 | 79.8% | 20427 | 84.1% | 15203 | 98.1% | 9709 | 98.6% | 9349 | 99.1% | 7684 |
| 13 | 65.8% | 27837 | 72.8% | 25361 | 76.3% | 18536 | 79.0% | 20985 | 80.4% | 20056 | 84.6% | 14904 | 98.7% | 9536 | 99.2% | 9164 | 99.6% | 7518 |
| 14 | 66.6% | 27426 | 73.3% | 24955 | 76.8% | 18200 | 79.7% | 20639 | 81.0% | 19685 | 85.1% | 14604 | 99.3% | 9363 | 99.7% | 8980 | 100.2% | 7352 |
| 15 | 67.3% | 27014 | 73.9% | 24548 | 77.2% | 17864 | 80.4% | 20292 | 81.6% | 19313 | 85.6% | 14305 | 99.9% | 9190 | 100.3% | 8796 | 100.8% | 7186 |
| 16 | 68.1% | 26603 | 74.4% | 24142 | 77.7% | 17528 | 81.1% | 19945 | 82.3% | 18942 | 86.1% | 14005 | 100.5% | 9016 | 100.9% | 8611 | 101.4% | 7020 |
| 17 | 68.8% | 26191 | 74.9% | 23736 | 78.1% | 17191 | 81.7% | 19599 | 82.9% | 18571 | 86.6% | 13706 | 101.1% | 8843 | 101.5%" | 8427 | 102.0% | 6854 |

(continued)

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance | Lumi-nance uniformity | Lumi-nance |
| 1-8 | 69.6% | 25780 | 75.5% | 23329 | 78.6% | 16855 | 82.4% | 19252 | 83.5% | 18200 | 87.2% | 13406 | 101.7% | 8670 | 102.1% | 8243 | 102.5% | 6688 |
| 1-9 | 70.3% | 25368 | 76.0% | 22923 | 79.1% | 16519 | 83.1% | 18905 | 84.1% | 17829 | 87.7% | 13107 | 102.3% | 8497 | 102.6% | 8058 | 103.1% | 6522 |
| 2-0 | 71.1% | 24956 | 76.5% | 22517 | 79.5% | 16183 | 83.7% | 18559 | 84.7% | 17458 | 88.2% | 12808 | 102.9% | 8324 | 103.2% | 7874 | 103.7% | 6357 |
| 2-1 | 71.8% | 24545 | 77.1% | 22110 | 80.0% | 15847 | 84.4% | 18212 | 85.4% | 17086 | 88.7% | 12508 | 103.5% | 8151 | 103.8% | 7689 | 104.3% | 6191 |
| 2-2 | 72.6% | 24133 | 77.6% | 21704 | 80.4% | 15510 | 85.1% | 17865 | 86.0% | 16715 | 89.2% | 12209 | 104.1% | 7978 | 104.4% | 7505 | 104.9% | 6025 |
| 2-3 | 73.3% | 23722 | 78.1% | 21298 | 80.9% | 15174 | 85.7% | 17519 | 86.6% | 16344 | 89.7% | 11909 | 104.7% | 7805 | 105.0% | 7321 | 105.4% | 5859 |
| 2-4 | 74.1% | 23310 | 78.6% | 20891 | 81.4% | 14838 | 86.4% | 17172 | 87.2% | 15973 | 90.2% | 11610 | 105.3% | 7632 | 105.5% | 7136 | 106.0% | 5693 |
| 2-5 | 74.8% | 22899 | 79.2% | 20485 | 81.8% | 14502 | 87.1% | 16826 | 87.8% | 15602 | 90.7% | 11311 | 105.9% | 7459 | 106.1% | 6952 | 106.6% | 5527 |
| 2-6 | 75.6% | 22487 | 79.7% | 20079 | 82.3% | 14166 | 87.8% | 16479 | 88.5% | 15231 | 91.2% | 11011 | 106.5% | 7285 | 106.7% | 6768 | 107.2% | 5361 |
| 2-7 | 76.3% | 22075 | 80.2% | 19672 | 82.7% | 13829 | 88.4% | 16132 | 89.1% | 14859 | 91.7% | 10712 | 107.1% | 7112 | 107.3% | 6583 | 107.8% | 5196 |
| 2-8 | 77.1% | 21664 | 80.8% | 19266 | 83.2% | 13493 | 89.1% | 15786 | 89.7% | 14488 | 92.3% | 10412 | 107.7% | 6939 | 107.9% | 6399 | 108.3% | 5030 |
| 2-9 | 77.8% | 21252 | 81.3% | 18860 | 83.7% | 13157 | 89.8% | 15439 | 90.3% | 14117 | 92.8% | 10113 | 108.3% | 6766 | 108.4% | 6215 | 108.9% | 4864 |
| 3-0 | 78.6% | 20841 | 81.8% | 18453 | 84.1% | 12821 | 90.4% | 15092 | 90.9% | 13746 | 93.3% | 9813 | 108.9% | 6593 | 109.0% | 6030 | 109.5% | 4698 |
| 3-1 | 79.3% | 20429 | 82.4% | 18047 | 84.6% | 12484 | 91.1% | 14746 | 91.6% | 13375 | 93.8% | 9514 | 109.5% | 6420 | 109.6% | 5846 | 110.1% | 4532 |

(continued)

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 3-2 | 80.1% | 20017 | 82.9% | 17641 | 85.0% | 12148 | 91.8% | 14399 | 92.2% | 13004 | 94.3% | 9215 | 110.1% | 6247 | 110.2% | 5661 | 110.7% | 4366 |
| 3-3 | 80.8% | 19606 | 83.4% | 17234 | 85.5% | 11812 | 92.4% | 14052 | 92.8% | 12632 | 94.8% | 8915 | 110.7% | 6074 | 110.8% | 5477 | 111.2% | 4200 |
| 3-4 | 81.6% | 19194 | 83.9% | 16828 | 86.0% | 11476 | 93.1% | 13706 | 93.4% | 12261 | 95.3% | 8616 | 111.3% | 5901 | 111.3% | 5293 | 111.8% | 4034 |
| 3-5 | 82.3% | 18783 | 84.5% | 16422 | 86.4% | 11140 | 93.8% | 13359 | 94.0% | 11890 | 95.8% | 8316 | 111.9% | 5728 | 111.9% | 5108 | 112.4% | 3869 |
| 3-6 | 83.1% | 18371 | 85.0% | 16015 | 86.9% | 10803 | 94.5% | 13012 | 94.7% | 11519 | 96.3% | 8017 | 112.5% | 5554 | 112.5% | 4924 | 113.0% | 3703 |

Table 4

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 3-7 | 83.8% | 17960 | 85.5% | 15609 | 87.3% | 10467 | 95.1% (10 | 12666 | 95.3% | 11148 | 96.8% | 7717 | 113.1% | 5381 | 113.1% | 4740 | 113.6% | 3537 |
| 3-8 | 84.6% | 17548 | 86.1% | 15203 | 87.8% | 10131 | 95.8% | 12319 | 95.9% | 10777 | 97.4% | 7418 | 113.7% | 5208 | 113.7% | 4555 | 114.1% | 3371 |
| 3-9 | 85.3% | 17136 | 86.6% | 14797 | 88.3% | 9795 | 96.5% | 11972 | 96.5% | 10405 | 97.9% | 7119 | 114.3% | 5035 | 114.2% | 4371 | 114.7% | 3205 |
| 4-0 | 86.1% | 16725 | 87.1% | 14390 | 88.7% | 9459 | 97.1% | 11626 | 97.1% | 10034 | 98.4% | 6819 | 114.9% | 4862 | 114.8% | 4187 | 115.3% | 3039 |
| 4-1 | 86.8% | 16313 | 87.7% | 13984 | 89.2% | 9122 | 97.8% | 11279 | 97.8% | 9663 | 98.9% | 6520 | 115.5% | 4689 | 115.4% | 4002 | 115.9% | 2873 |
| 4-2 | 87.6% | 15902 | 88.2% | 13578 | 89.6% | 8786 | 98.5% | 10932 | 98.4% | 9292 | 99.4% | 6220 | 116.1% | 4516 | 116.0% | 3818 | 116.5% | 2707 |
| 4-3 | 88.3% | 15490 | 88.7% | 13171 | 90.1% | 8450 | 99.1% | 10586 | 99.0% | 8921 | 99.9% | 5921 | 116.7% | 4343 | 116.6% | 3634 | 117.0% | 2542 |
| 4-4 | 89.1% | 15078 | 89.2% | 12765 | 90.6% | 8114 | 99.8% | 10239 | 99.6% | 8550 | 100.4% | 5622 | 117.3% | 4170 | 117.1% | 3449 | 117.6% | 2376 |
| 4-5 | 89.8% | 14667 | 89.8% | 12359 | 91.0% | 7778 | 100.5% | 9892 | 100.2% | 8178 | 100.9% | 5322 | 117.9% | 3997 | 117.7% | 3265 | 118.2% | 2210 |
| 4-6 | 90.6% | 14255 | 90.3% | 11952 | 91.5% | 7441 | 101.2% | 9546 | 100.9% | 7807 | 101.4% | 5023 | 118.5% | 3823 | 118.3% | 3080 | 118.8% | 2044 |
| 4-7 | 91.3% | 13844 | 90.8% | 11546 | 91.9% | 7105 | 101.8% | 9199 | 101.5% | 7436 | 101.9% | 4723 | 119.1% | 3650 | 118.9% | 2896 | 119.4% | 1878 |
| 4-8 | 92.1% | 13432 | 91.4% | 11140 | 92.4% | 6769 | 102.5% | 8852 | 102.1% | 7065 | 102.5% | 4424 | 119.7% | 3477 | 119.5% | 2712 | 119.9% | 1712 |
| 4-9 | 92.8% | 13021 | 91.9% | 10733 | 92.9% | 6433 | 103.2% | 8506 | 102.7% | 6694 | 103.0% | 4124 | 120.3% | 3304 | 120.0% | 2527 | 120.5% | 1546 |

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 5-0 | 93.6% | 12609 | 92.4% | 10327 | 93.3% | 6097 | 103.8% | 8159 | 103.3% | 6323 | 103.5% | 3825 | 120.9% | 3131 | 120.6% | 2343 | 121.1% | 1381 |
| 5-1 | 94.3% | 12197 | 93.0% | 9921 | 93.8% | 5760 | 104.5% | 7812 | 104.0% | 5951 | 104.0% | 3526 | 121.5% | 2958 | 121.2% | 2159 | 121.7% | 1215 |
| 5-2 | 95.1% | 11786 | 93.5% | 9514 | 94.2% | 5424 | 105.2% | 7466 | 104.6% | 5580 | 104.5% | 3226 | 122.1% | 2785 | 121.8% | 1974 | 122.3% | 1049 |
| 5-3 | 95.8% | 11374 | 94.0% | 9108 | 94.7% | 5088 | 105.8% | 7119 | 105.2% | 5209 | 105.0% | 2927 | 122.7% | 2612 | 122.4% | 1790 | 122.8% | 883 |
| 5-4 | 96.6% | 10963 | 94.5% | 8702 | 95.2% | 4752 | 106.5% | 6772 | 105.8% | 4838 | 105.5% | 2627 | 123.3% | 2439 | 122.9% | 1606 | 123.4% | 717 |
| 5-5 | 97.3% | 10551 | 95.1% | 8295 | 95.6% | 4415 | 107.2% | 6426 | 106.4% | 4467 | 106.0% | 2328 | 123.9% | 2266 | 123.5% | 1421 | 124.0% | 551 |
| 5-6 | 98.1% | 10140 | 95.6% | 7889 | 96.1% | 4079 | 107.9% | 6079 | 107.1% | 4095 | 106.5% | 2028 | 124.5% | 2092 | 124.1% | 1237 | 124.6% | 385 |
| 5-7 | 98.8% | 9728 | 96.1% | 7483 | 96.5% | 3743 | 108.5% | 5732 | 107.7% | 3724 | 107.0% | 1729 | 125.1% | 1919 | 124.7% | 1052 | 125.2% | 219 |
| 5-8 | 99.6% | 9316 | 96.7% | 707 6 | 97.0% | 3407 | 109.2% | 5386 | 108.3% | 3353 | 107.6% | 1430 | 125.7% | 1746 | 125.3% | 868 | 125.7% | 54 |
| 5-9 | 100.3% | 8905 | 97.2% | 6670 | 97.5% | 3071 | 109.9% | 5039 | 108.9% | 2982 | 108.1% | 1130 | 126.3% | 1573 | 125.8% | 684 | 126.3% | |
| 6-0 | 101.1% | 8493 | 97.7% | 6264 | 97.9% | 2734 | 110.5% | 4692 | 109.5% | 2611 | 108.6% | 831 | 126.9% | 1400 | 126.4% | 499 | 126.9% | |
| 6-1 | 101.8% | 8082 | 98.3% | 5857 | 98.4% | 2398 | 111.2% | 4346 | 110.2% | 2240 | 109.1% | 531 | 127.5% | 1227 | 127.0% | 315 | 127.5% | |
| 6-2 | 102.6% | 7670 | 98.8% | 5451 | 98.8% | 2062 | 111.9% | 3999 | 110.8% | 1868 | 109.6% | 232 | 128.1% | 1054 | 127.6% | 131 | 128.1% | |
| 6-3 | 103.3% | 7258 | 99.3% | 5045 | 99.3% | 1726 | 112.5% | 3652 | 111.4% | 1497 | 110.1% | | 128.7% | 881 | 128.2% | | 128.6% | |

(continued)

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity |
| 6-4 | 6847 | 104.1% | 4639 | 99.8% | 1390 | 99.8% | 3306 | 113.2% | 1126 | 112.0% | | 110.6% | 708 | 129.3% | | 128.7% | | 129.2% |
| 6-5 | 6435 | 104.8% | 4232 | 100.4% | 1053 | 100.2% | 2959 | 113.9% | 755 | 112.6% | | 111.1% | 535 | 129.9% | | 129.3% | | 129.8% |
| 6-6 | 6024 | 105.6% | 3826 | 100.9% | 717 | 100.7% | 2612 | 114.6% | 384 | 113.3% | | 111.6% | 361 | 130.5% | | 129.9% | | 130.4% |
| 6-7 | 5612 | 106.3% | 3420 | 101.4% | 381 | 101.1% | 2266 | 115.2% | 13 | 113.9% | | 112.1% | 188 | 131.1% | | 130.5% | | 131.0% |
| 6-8 | 5201 | 107.1% | 3013 | 102.0% | 45 | 101.6% | 1919 | 115.9% | | 114.5% | | 112.7% | 15 | 131.7% | | 131.1% | | 131.5% |
| 6-9 | 4789 | 107.8% | 2607 | 102.5% | | 102.1% | 1572 | 116.6% | | 115.1% | | 113.2% | | 132.3% | | 131.6% | | 132.1% |
| 7-0 | 4377 | 108.6% | 2201 | 103.0% | | 102.5% | 1226 | 117.2% | | 115.7% | | 113.7% | | 132.9% | | 132.2% | | 132.7% |
| 7-1 | 3966 | 109.3% | 1794 | 103.6% | | 103.0% | 879 | 117.9% | | 116.4% | | 114.2% | | 133.5% | | 132.8% | | 133.3% |
| 7-2 | 3554 | 110.1% | 1388 | 104.1% | | 103.4% | 532 | 118.6% | | 117.0% | | 114.7% | | 134.1% | | 133.4% | | 133.9% |

EP 4 668 008 A1

Table 5

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 0 | 39.8% | 32004 | 48.1% | 29447 | 53.4% | 21884 | 54.2% | 24136 | 58.2% | 23385 | 65.3% | 17553 | 83.6% | 10916 | 83.8% | 10717 | 85.4% | 8996 |
| 1 | 40.7% | 31599 | 48.9% | 29050 | 54.1% | 21560 | 55.2% | 23803 | 59.1% | 23033 | 66.0% | 17273 | 84.3% | 10760 | 84.5% | 10549 | 86.0% | 8844 |
| 2 | 41.6% | 31194 | 49.6% | 28652 | 54.8% | 21236 | 56.1% | 23471 | 59.9% | 22682 | 66.7% | 16993 | 84.9% | 10603 | 85.2% | 10382 | 86.7% | 8692 |
| 3 | 42.6% | 30788 | 50.4% | 28255 | 55.4% | 20911 | 57.0% | 23138 | 60.8% | 22330 | 67.4% | 16713 | 85.6% | 10447 | 85.8% | 10214 | 87.3% | 8540 |
| 4 | 43.5% | 30383 | 51.1% | 27857 | 56.1% | 20587 | 58.0% | 22805 | 61.6% | 21979 | 68.1% | 16433 | 86.3% | 10291 | 86.5% | 10046 | 88.0% | 8388 |
| 5 | 44.5% | 29978 | 51.9% | 27460 | 56.8% | 20263 | 58.9% | 22472 | 62.5% | 21627 | 68.8% | 16153 | 87.0% | 10134 | 87.2% | 9879 | 88.6% | 8236 |
| 6 | 45.4% | 29573 | 52.6% | 27062 | 57.5% | 19939 | 59.9% | 22140 | 63.3% | 21276 | 69.5% | 15873 | 87.7% | 9978 | 87.9% | 9711 | 89.3% | 8084 |
| 7 | 46.3% | 29168 | 53.4% | 26665 | 58.2% | 19615 | 60.8% | 21807 | 64.2% | 20924 | 70.2% | 15593 | 88.4% | 9822 | 88.6% | 9544 | 89.9% | 7932 |
| 8 | 47.3% | 28762 | 54.1% | 26267 | 58.8% | 19290 | 61.7% | 21474 | 65.0% | 20573 | 70.9% | 15313 | 89.1% | 9665 | 89.2% | 9376 | 90.6% | 7780 |
| 9 | 48.2% | 28357 | 54.9% | 25870 | 59.5% | 18966 | 62.7% | 21141 | 65.9% | 20221 | 71.6% | 15033 | 89.8% | 9509 | 89.9% | 9208 | 91.2% | 7628 |
| 1-0 | 49.2% | 27952 | 55.6% | 25472 | 60.2% | 18642 | 63.6% | 20809 | 66.7% | 19869 | 72.3% | 14753 | 90.5% | 9353 | 90.6% | 9041 | 91.9% | 7476 |
| 11 | 50.1% | 27547 | 56.4% | 25075 | 60.9% | 18318 | 64.6% | 20476 | 67.6% | 19518 | 73.0% | 14473 | 91.2% | 9196 | 91.3% | 8873 | 92.5% | 7324 |
| 1-2 | 51.0% | 27142 | 57.1% | 24677 | 61.6% | 17993 | 65.5% | 20143 | 68.4% | 19166 | 73.7% | 14193 | 91.8% | 9040 | 92.0% | 8705 | 93.2% | 7172 |
| 1-3 | 52.0% | 26736 | 57.9% | 24280 | 62.2% | 17669 | 66.4% | 19810 | 69.3% | 18815 | 74.4% | 13914 | 92.5% | 8884 | 92.6% | 8538 | 93.8% | 7020 |
| 1-4 | 52.9% | 26331 | 58.6% | 23882 | 62.9% | 17345 | 67.4% | 19478 | 70.1% | 18463 | 75.1% | 13634 | 93.2% | 8728 | 93.3% | 8370 | 94.5% | 6868 |
| 1-5 | 53.9% | 25926 | 59.4% | 23485 | 63.6% | 17021 | 68.3% | 19145 | 71.0% | 18112 | 75.8% | 13354 | 93.9% | 8571 | 94.0% | 8203 | 95.1% | 6716 |
| 1-6 | 54.8% | 25521 | 60.1% | 23087 | 64.3% | 16697 | 69.3% | 18812 | 71.8% | 17760 | 76.5% | 13074 | 94.6% | 8415 | 94.7% | 8035 | 95.8% | 6564 |
| 1-7 | 55.7% | 25116 | 60.9% | 22690 | 65.0% | 16372 | 70.2% | 18479 | 72.7% | 17408 | 77.2% | 12794 | 95.3% | 8259 | 95.4% | 7867 | 96.4% | 6412 |

20

(continued)

| L | Simulation No. 1 | | 2 | | 3 | | 4 | | 5 | | 6 | | 7 | | 8 | | 9 | |
|---|---|---|---|---|---|---|---|---|---|---|---|---|---|---|---|---|---|---|
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 1-8 | 56.7% | 24710 | 61.6% | 22292 | 65.6% | 16048 | 71.1% | 18147 | 73.5% | 17057 | 77.9% | 12514 | 96.0% | 8102 | 96.0% | 7700 | 97.1% | 6260 |
| 1-9 | 57.6% | 24305 | 62.4% | 21895 | 66.3 | 15724 | 72.1% | 17814 | 74.4% | 16705 | 78.6% | 12234 | 96.7% | 7946 | 96.7% | 7532 | 97.7% | 6108 |
| 2-0 | 58.6% | 23900 | 63.1% | 21497 | 67.0% | 15400 | 73.0% | 17481 | 75.2% | 16354 | 79.3% | 11954 | 97.4% | 7790 | 97.4% | 7364 | 98.4% | 5956 |
| 2-1 | 59.5% | 23495 | 63.9% | 21100 | 67.7% | 15076 | 74.0% | 17148 | 76.1% | 16002 | 80.0% | 11674 | 98.1% | 7633 | 98.1% | 7197 | 99.0% | 5804 |
| 2-2 | 60.4% | 23090 | 64.6% | 20702 | 68.4% | 14751 | 74.9% | 16816 | 76.9% | 15651 | 80.7% | 11394 | 98.7% | 7477 | 98.8% | 7029 | 99.7% | 5652 |
| 2-3 | 61.4% | 22684 | 65.4% | 20305 | 69.0% | 14427 | 75.8% | 16483 | 77.8% | 15299 | 81.4% | 11114 | 99.4% | 7321 | 99.4% | 6862 | 100.3% | 5500 |
| 2-4 | 62.3% | 22279 | 66.1% | 19907 | 69.7% | 14103 | 76.8% | 16150 | 78.6% | 14948 | 82.1% | 10834 | 100.1% | 7164 | 100.1% | 6694 | 101.0% | 5348 |
| 2-5 | 63.3% | 21874 | 66.9% | 19510 | 70.4% | 13779 | 77.7% | 15818 | 79.5% | 14596 | 82.8% | 10554 | 100.8% | 7008 | 100.8% | 6526 | 101.6% | 5196 |
| 2-6 | 64.2% | 21469 | 67.6% | 19112 | 71.1% | 13455 | 78.7% | 15485 | 80.3% | 14244 | 83.5% | 10274 | 101.5% | 6852 | 101.5% | 6359 | 102.3% | 5044 |
| 2-7 | 65.1% | 21064 | 68.4% | 18715 | 71.8% | 13130 | 79.6% | 15152 | 81.2% | 13893 | 84.2% | 9994 | 102.2% | 6695 | 102.2% | 6191 | 102.9% | 4892 |
| 2-8 | 66.1% | 20658 | 69.1% | 18317 | 72.4% | 12806 | 80.5% | 14819 | 82.0% | 13541 | 84.9% | 9714 | 102.9% | 6539 | 102.8% | 6023 | 103.6% | 4740 |
| 2-9 | 67.0% | 20253 | 69.9% | 17920 | 73.1% | 12482 | 81.5% | 14487 | 82.9% | 13190 | 85.6% | 9434 | 103.6% | 6383 | 103.5% | 5856 | 104.2% | 4588 |
| 3-0 | 68.0% | 19848 | 70.6% | 17522 | 73.8% | 12158 | 82.4% | 14154 | 83.7% | 12838 | 86.3% | 9154 | 104.3% | 6226 | 104.2% | 5688 | 104.9% | 4436 |
| 3-1 | 68.9% | 19443 | 71.4% | 17125 | 74.5% | 11833 | 83.4% | 13821 | 84.6% | 12487 | 87.0% | 8874 | 105.0% | 6070 | 104.9% | 5520 | 105.5% | 4284 |

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 3-2 | 69.8% | 19038 | 72.1% | 16727 | 75.2% | 11509 | 84.3% | 13488 | 85.4% | 12135 | 87.7% | 8594 | 105.6% | 5914 | 105.6% | 5353 | 106.2% | 4132 |
| 3-3 | 70.8% | 18632 | 72.9% | 16330 | 75.8% | 11185 | 85.2% | 13156 | 86.3% | 11784 | 88.4% | 8314 | 106.3% | 5757 | 106.2% | 5185 | 106.8% | 3980 |
| 3-4 | 71.7% | 18227 | 73.6% | 15932 | 76.5% | 10861 | 86.2% | 12823 | 87.1% | 11432 | 89.1% | 8034 | 107.0% | 5601 | 106.9% | 5018 | 107.5% | 3828 |
| 3-5 | 72.7% | 17822 | 74.4% | 15535 | 77.2% | 10537 | 87.1% | 12490 | 88.0% | 11080 | 89.8% | 7754 | 107.7% | 5445 | 107.6% | 4850 | 108.1% | 3676 |
| 3-6 | 73.6% | 17417 | 75.1% | 15137 | 77.9% | 10212 | 88.1% | 12157 | 88.8% | 10729 | 90.5% | 7474 | 108.4% | 5288 | 108.3% | 4682 | 108.8% | 3523 |

EP 4 668 008 A1

Table 6

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 3-7 | 74.5% | 17012 | 75.9% | 14740 | 78.6% | 9888 | 89.0% | 11825 | 89.7% | 10377 | 91.2% | 7194 | 109.1% | 5132 | 109.0% | 4515 | 109.4% | 3371 |
| 3-8 | 75.5% | 16606 | 76.6% | 14342 | 79.2% | 9564 | 89.9% | 11492 | 90.5% | 10026 | 91.9% | 6915 | 109.8% | 4976 | 109.6% | 4347 | 110.1% | 3219 |
| 3-9 | 76.4% | 16201 | 77.4% | 13945 | 79.9% | 9240 | 90.9% | 11159 | 91.4% | 9674 | 92.6% | 6635 | 110.5% | 4820 | 110.3% | 4179 | 110.7% | 3067 |
| 4-0 | 77.4% | 15796 | 78.1% | 13547 | 80.6% | 8916 | 91.8% | 10826 | 92.2% | 9323 | 93.3% | 6355 | 111.2% | 4663 | 111.0% | 4012 | 111.4% | 2915 |
| 4-1 | 78.3% | 15391 | 78.9% | 13150 | 81.3% | 8591 | 92.8% | 10494 | 93.1% | 8971 | 94.0% | 6075 | 111.9% | 4507 | 111.7% | 3844 | 112.0% | 2763 |
| 4-2 | 79.2% | 14986 | 79.6% | 12752 | 82.0% | 8267 | 93.7% | 10161 | 93.9% | 8619 | 94.7% | 5795 | 112.5% | 4351 | 112.4% | 3677 | 112.7% | 2611 |
| 4-3 | 80.2% | 14580 | 80.4% | 12355 | 82.6% | 7943 | 94.6% | 9828 | 94.8% | 8268 | 95.4% | 5515 | 113.2% | 4194 | 113.0% | 3509 | 113.3% | 2459 |
| 4-4 | 81.1% | 14175 | 81.1% | 11957 | 83.3% | 7619 | 95.6% | 9495 | 95.6% | 7916 | 96.1% | 5235 | 113.9% | 4038 | 113.7% | 3341 | 114.0% | 2307 |
| 4-5 | 82.1% | 13770 | 81.9% | 11560 | 84.0% | 7295 | 96.5% | 9163 | 96.5% | 7565 | 96.8% | 4955 | 114.6% | 3882 | 114.4% | 3174 | 114.6% | 2155 |
| 4-6 | 83.0% | 13365 | 82.6% | 11162 | 84.7% | 6970 | 97.5% | 8830 | 97.3% | 7213 | 97.5% | 4675 | 115.3% | 3725 | 115.1% | 3006 | 115.3% | 2003 |
| 4-7 | 83.9% | 12960 | 83.4% | 10765 | 85.4% | 6646 | 98.4% | 8497 | 98.2% | 6862 | 98.2% | 4395 | 116.0% | 3569 | 115.8% | 2838 | 115.9% | 1851 |
| 4-8 | 84.9% | 12554 | 84.1% | 10367 | 86.0% | 6322 | 99.3% | 8164 | 99.0% | 6510 | 98.9% | 4115 | 116.7% | 3413 | 116.4% | 2671 | 116.6% | 1699 |
| 4-9 | 85.8% | 12149 | 84.9% | 9970 | 86.7% | 5998 | 100.3% | 7832 | 99.9% | 6159 | 99.6% | 3835 | 117.4% | 3256 | 117.1% | 2503 | 117.2% | 1547 |

(continued)

| | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| L | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 5-0 | 86.8% | 11744 | 85.6% | 9572 | 87.4% | 5674 | 101.2% | 7499 | 100.7% | 5807 | 100.3% | 3555 | 118.1% | 3100 | 117.8% | 2336 | 117.9% | 1395 |
| 5-1 | 87.7% | 11339 | 86.4% | 9175 | 88.1% | 5349 | 102.2% | 7166 | 101.6% | 5455 | 101.0% | 3275 | 118.8% | 2944 | 118.5% | 2168 | 118.5% | 1243 |
| 5-2 | 88.6% | 10934 | 87.1% | 8777 | 88.8% | 5025 | 103.1% | 6834 | 102.4% | 5104 | 101.7% | 2995 | 119.4% | 2787 | 119.2% | 2000 | 119.2% | 1091 |
| 5-3 | 89.6% | 10528 | 87.9% | 8380 | 89.4% | 4701 | 104.0% | 6501 | 103.3% | 4752 | 102.4% | 2715 | 120.1% | 2631 | 119.8% | 1833 | 119.8% | 939 |
| 5-4 | 90.5% | 10123 | 88.6% | 7982 | 90.1% | 4377 | 105.0% | 6168 | 104.1% | 4401 | 103.1% | 2435 | 120.8% | 2475 | 120.5% | 1665 | 120.5% | 787 |
| 5-5 | 91.5% | 9718 | 89.4% | 7585 | 90.8% | 4052 | 105.9% | 5835 | 105.0% | 4049 | 103.8% | 2155 | 121.5% | 2318 | 121.2% | 1497 | 121.1% | 635 |
| 5-6 | 92.4% | 9313 | 90.1% | 7187 | 91.5% | 3728 | 106.9% | 5503 | 105.8% | 3698 | 104.5% | 1875 | 122.2% | 2162 | 121.9% | 1330 | 121.8% | 483 |
| 5-7 | 93.3% | 8908 | 90.9% | 6790 | 92.2% | 3404 | 107.8% | 5170 | 106.7% | 3346 | 105.2% | 1595 | 122.9% | 2006 | 122.6% | 1162 | 122.4% | 331 |
| 5-8 | 94.3% | 8502 | 91.6% | 6392 | 92.8% | 3080 | 108.7% | 4837 | 107.5% | 2995 | 105.9% | 1315 | 123.6% | 1849 | 123.2% | 994 | 123.1% | 179 |
| 5-9 | 95.2% | 8097 | 92.4% | 5995 | 93.5% | 2756 | 109.7% | 4504 | 108.4% | 2643 | 106.6% | 1035 | 124.3% | 1693 | 123.9% | 827 | 123.7% | 27 |
| 6-0 | 96.2% | 7692 | 93.1% | 5597 | 94.2% | 2431 | 110.6% | 4172 | 109.2% | 2291 | 107.3% | 755 | 125.0% | 1537 | 124.6% | 659 | 124.4% | |
| 6-1 | 97.1% | 7287 | 93.9% | 5200 | 94.9% | 2107 | 111.6% | 3839 | 110.1% | 1940 | 108.0% | 475 | 125.7% | 1380 | 125.3% | 492 | 125.0% | |
| 6-2 | 98.0% | 6882 | 94.6% | 4802 | 95.6% | 1783 | 112.5% | 3506 | 110.9% | 1588 | 108.7% | 195 | 126.3% | 1224 | 126.0% | 324 | 125.7% | |
| 6-3 | 99.0% | 6476 | 95.4% | 4405 | 96.2% | 1459 | 113.4% | 3173 | 111.8% | 1237 | 109.4% | | 127.0% | 1068 | 126.6% | 156 | 126.3% | |

EP 4 668 008 A1

| L | Simulation No. | | | | | | | | | | | | | | | | | |
|---|---|---|---|---|---|---|---|---|---|---|---|---|---|---|---|---|---|---|
| | 1 | | 2 | | 3 | | 4 | | 5 | | 6 | | 7 | | 8 | | 9 | |
| | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance | Luminance uniformity | Luminance |
| 6-4 | 99.9% | 6071 | 96.1% | 4007 | 96.9% | 1135 | 114.4% | 2841 | 112.6% | 885 | 110.1% | | 127.7% | 912 | 127.3% | | 127.0% | |
| 6-5 | 100.9% | 5666 | 96.9% | 3610 | 97.6% | 810 | 115.3% | 2508 | 113.5% | 534 | 110.8% | | 128.4% | 755 | 128.0% | | 127.6% | |
| 6-6 | 101.8% | 5261 | 97.6% | 3212 | 98.3% | 486 | 116.3% | 2175 | 114.3% | 182 | 111.5% | | 129.1% | 599 | 128.7% | | 128.3% | |
| 6-7 | 102.7% | 4856 | 98.4% | 2815 | 99.0% | 162 | 117.2% | 1842 | 115.2% | | 112.2% | | 129.8% | 443 | 129.4% | | 128.9% | |
| 6-8 | 103.7% | 4450 | 99.1% | 2417 | 99.6% | | 118.1% | 1510 | 116.0% | | 112.9% | | 130.5% | 286 | 130.0% | | 129.6% | |
| 6-9 | 104.6% | 4045 | 99.9% | 2020 | 100.3% | | 119.1% | 1177 | 116.9% | | 113.6% | | 131.2% | 130 | 130.7% | | 130.2% | |
| 7-0 | 105.6% | 3640 | 100.6% | 1622 | 101.0% | | 120.0% | 844 | 117.7% | | 114.3% | | 131.9% | | 131.4% | | 130.9% | |
| 7-1 | 106.5% | 3235 | 101.4% | 1225 | 101.7% | | 121.0% | 511 | 118.6% | | 115.0% | | 132.6% | | 132.1% | | 131.5% | |
| 7-2 | 107.4% | 2830 | 102.1% | 827 | 102.4% | | 121.9% | 179 | 119.4% | | 115.7% | | 133.2% | | 132.8% | | 132.2% | |

Tables 1 to 6 show simulation results of the luminance uniformity (%) and the luminance (cd/m$^2$) of light incident on the liquid crystal panel 9 with the distance L between the lens member 7 and the diffuser plate 8 being varied. Tables 1 and 2 show the results for the pitch P set to 4.2 mm. Tables 3 and 4 show the results for the pitch P set to 5.0 mm. Tables 5 and 6 show the results for the pitch P set to 6.0 mm. As shown in FIG. 4, the luminance of light emitted from the backlight 2 substantially increases in proportion to the drive current applied to each of the light emitters 4. Tables 1 and 2 show the results for the drive current applied to each of the light emitters 4 being 65 mA. Tables 3 and 4 show the results for the drive current applied to each of the light emitters 4 being 65 mA. Tables 5 and 6 show the results for the drive current applied to each of the light emitters 4 being 65 mA.

In the "Simulation No." in Tables 1 to 6, the number "1" shows the results for the half-value angle Θ set to 20° and the haze value H set to 35%. The number "2" shows the results for the half-value angle Θ set to 30° and the haze value H set to 35%. The number "3" shows the results for the half-value angle Θ set to 39° and the haze value H set to 35%. The number "4" shows the results for the half-value angle Θ set to 20° and the haze value H set to 52%. The number "5" shows the results for the half-value angle Θ set to 30° and the haze value H set to 52%. The number "6" shows the results for the half-value angle Θ set to 39° and the haze value H set to 52%. The number "7" shows the results for the half-value angle Θ set to 20° and the haze value H set to 76%. The number "8" shows the results for the half-value angle Θ set to 30° and the haze value H set to 76%. The number "9" shows the results for the half-value angle Θ set to 39° and the haze value H set to 76%.

As shown in Tables 1 to 6, the liquid crystal display 1 sets the distance L to a predetermined value, or more specifically, 0 to 72 mm inclusive, based on the half-value angle Θ, the haze value H, and the pitch P, allowing light with higher luminance and higher luminance uniformity to be incident on the liquid crystal panel 9. As shown in Tables 1 to 6, increasing the distance L allows light with higher luminance uniformity to be incident on the liquid crystal panel 9. However, the light incident on the liquid crystal panel 9 tends to have lower luminance. The distance L with an upper limit less than or equal to 57 mm can increase luminance further.

An example method for designing the liquid crystal display 1 will now be described with reference to Tables 1 and 2. For example, the liquid crystal display 1 is designed, using a liquid crystal display with the pitch P of 4.2 mm, to allow light with luminance uniformity greater than or equal to 95% and luminance greater than or equal to 13000 cd/m$^2$ to be incident on the liquid crystal panel 9. Multiple combinations of the distance L, the half-value angle Θ, and the haze value H that satisfy the above conditions are indicated with the bold lines in the tables. A single combination is selected from the multiple combinations. The distance L, the half-value angle Θ, and the haze value H are set based on the single combination to design the liquid crystal display 1 that allows light with luminance uniformity greater than or equal to 95% and luminance greater than or equal to 13000 cd/m$^2$ to be incident on the liquid crystal panel 9. Selecting, from the multiple combinations, a combination with a relatively small distance L allows the liquid crystal display 1 to be downsized with a higher contrast. Selecting, from the multiple combinations, a combination with a relatively large distance L can reduce the likelihood of the orientation of the liquid crystal molecules included in the liquid crystal panel 9 being uncontrollable under heat generated in the backlight 2. This improves the reliability of the liquid crystal display 1.

The evaluation results obtained actually using an in-plane FFS thin film transistor (TFT) liquid crystal panel of 4.1 inches as the liquid crystal panel 9 are shown. A liquid crystal display including LEDs arranged with the pitch P of 4.2 mm was prepared using the LEDs as a light source for the backlight 2. The liquid crystal display includes the lens member 7 with the half-value angle Θ of 20° and the diffuser plate 8 with the haze value H of 35% located above the backlight 2. The lens member 7 is at the distance L of 45 mm from the diffuser plate 8.

FIGs. 6A and 6B are diagrams describing a virtual image formed by a virtual image display device including the fabricated liquid crystal display. FIG. 6A is a photograph of a virtual image formed by the virtual image display device including the fabricated liquid crystal display captured with a CCD camera. FIG. 6B is a graph showing the luminance profile taken along line A-B in the captured photograph.

The photograph in FIG. 6A shows a virtual image in a state in which all the images in the entire display area of the liquid crystal display are turned on, and all the LEDs serving as the light source of the backlight 2 are turned on. FIG. 6B shows the captured photograph as luminance data. The graph shows partial peaks and valleys, which are numbered for convenience. Luminance uniformity refers to a small luminance difference between peaks and valleys. Luminance uniformity U can be expressed using Formula 8, where V1 is luminance at a specific valley 1, V2 is luminance at a valley 2 adjacent to the valley 1, and Peak is luminance at a peak between the valley 1 and the valley 2.

$$U = \{(V1 + V2)/2\}/\text{Peak} \qquad (8)$$

Table 7

| Position (in FIG. 6B) | | 3 | 5 | 7 | 9 | 11 | 13 | 15 | 17 | 19 | 21 | 23 | 25 | 27 | 29 | 31 | 33 |
|---|---|---|---|---|---|---|---|---|---|---|---|---|---|---|---|---|---|
| Measurement results | Virtual image luminance uniformity (%) | 91 | 91 | 96 | 95 | 96 | 98 | 98 | 100 | 97 | 96 | 97 | 95 | 93 | 91 | 89 | 88 |
| | Virtual image luminance (cd/m$^2$) | 15875 | 17686 | 17529 | 17958 | 18490 | 18864 | 19575 | 19649 | 19612 | 18805 | 17558 | 17257 | 16664 | 15987 | 14865 | 13372 |

Table 7 shows the luminance uniformity and the luminance of the virtual image at the positions shown in FIG. 6B. The results are substantially the same as or similar to the simulation results shown in Tables 1 and 2. The distance L, the half-value angle $\Theta$, and the haze value H can thus be easily combined based on Tables 1 to 6.

The structure according to one or more embodiments of the present disclosure is not limited to the structure described in the embodiment above, and may be varied or altered variously. For example, the functions of the components are reconfigurable unless any contradiction arises. Multiple components may be combined into a single unit, or a single component may be divided into separate units. For example, the backlight 2 may include the lens member 7, or may include the lens member 7 and the diffuser plate 8.

Tables 1 to 6 reveal the trend of higher luminance of light incident on the liquid crystal panel 9 for a smaller haze value H of the diffuser plate 8, and the trend of higher luminance uniformity of the light for a larger haze value H of the diffuser plate 8. Tables 1 to 6 also reveal the trend of higher luminance uniformity of the light for a larger half-value angle $\Theta$.

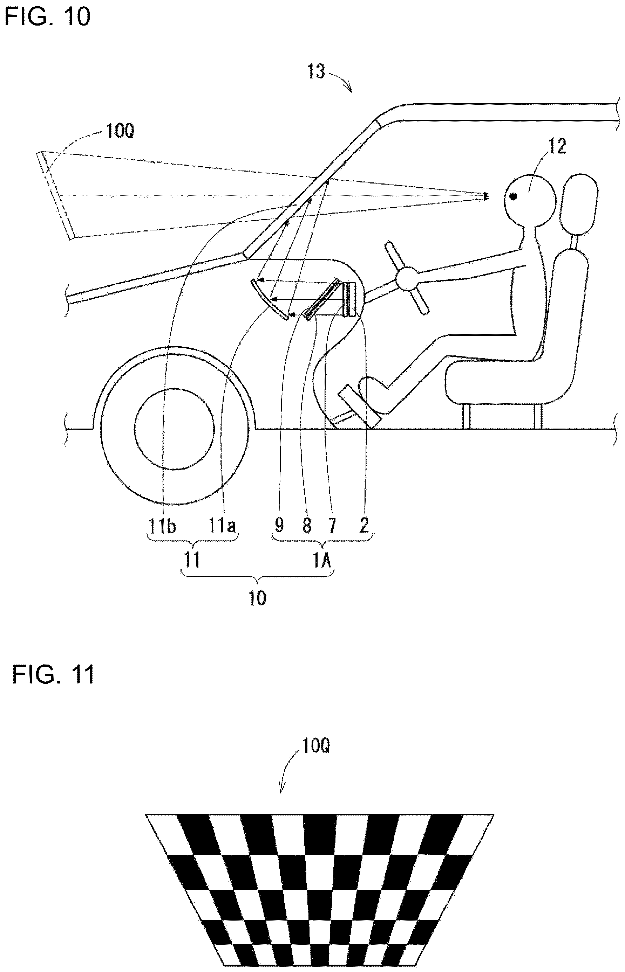

A liquid crystal display according to another embodiment of the present disclosure will now be described. FIG. 9 is a cross-sectional view of a liquid crystal display according to another embodiment of the present disclosure. FIG. 10 is a schematic diagram of a virtual image display device including the liquid crystal display in FIG. 9. FIG. 11 is a diagram of an example virtual image viewed by a user of the virtual image display device in FIG. 10. The cross-sectional view in FIG. 9 corresponds to the cross-sectional view in FIG. 2. The components that are the same as or similar to the components in the above embodiment are denoted by the same reference numerals and will not be described in detail.

In the present embodiment, a liquid crystal display 1A includes the backlight 2, the lens member 7, the diffuser plate 8, and the liquid crystal panel 9. As illustrated in FIG. 9, the liquid crystal display 1A has the display surface 9a of the liquid crystal panel 9 tilted with respect to the first surface 3a of the substrate 3 in the backlight 2. A tilt angle $\alpha$ of the display surface 9a with respect to the first surface 3a may be, for example, about 10 to 45°. The tilt angle $\alpha$ is an angle formed between the normal to the display surface 9a and the normal to the first surface 3a. As illustrated in FIG. 11, the virtual image display device 10 (refer to FIG. 10) including the liquid crystal display 1A causes the user 12 to view the virtual image 10Q with a sense of depth. Although FIG. 9 illustrates the display surface 9a of the liquid crystal panel 9 tilted with respect to the first surface 3a of the substrate 3 in the backlight 2, the structure is not limited to this example. For example, the display surface 9a of the liquid crystal panel 9 may have a curved surface portion.

The liquid crystal display 1A includes multiple areas 16. Each of the multiple areas 16 includes a part of the backlight 2 including at least two light emitters 4, a part of the lens member 7 through which light emitted from the part of the backlight 2 passes, a part of the diffuser plate 8, and a part of the liquid crystal panel 9. Each of the multiple areas 16 has a different distance L between the part of the lens member 7 and the part of the diffuser plate 8. The distance L may be in a direction perpendicular to the first surface 3a of the substrate 3. The distance L may be the smallest distance between the part of the lens member 7 and the part of the diffuser plate 8, the largest distance between the part of the lens member 7 and the part of the diffuser plate 8, or the average of the smallest distance and the largest distance.

The multiple areas 16 may extend in the horizontal direction (perpendicular to the pages in FIGs. 9 and 10). The multiple areas 16 may be at different positions in the vertical direction (the vertical direction in FIGs. 9 and 10). Although the liquid crystal display 1A in FIG. 9 includes three areas 161, 162, and 163, the structure is not limited to this example. The liquid crystal display 1A may include two areas 16 or four or more areas 16.

The pitch P at which the at least two light emitters 4 are arranged, the half-value angle $\Theta$ of light emitted from the part of the lens member 7, and the haze value H of the part of the diffuser plate 8 in each of the areas 16 may be determined based on the distance L between the part of the lens member 7 and the part of the diffuser plate 8. This can increase the luminance uniformity in each of the areas 16, thus allowing more effective local dimming control. The liquid crystal display 1A may be configured to set, for each of the areas 16, a drive current to be supplied to the multiple light emitters 4. Each of the multiple light emitters 4 may receive a drive current set for each of the areas 16 based on, for example, the distance L between the part of the lens member 7 and the part of the diffuser plate 8. This allows light emitted from the multiple areas 16 to have luminance matching or substantially matching one another, thus allowing more effective local dimming control.

The design and the operation of the liquid crystal display 1A will now be described. As illustrated in FIG. 9, the liquid crystal display 1A includes the three areas 161, 162, and 163. The areas 161, 162, and 163 are also respectively referred to as a first area, a second area, and a third area.

Table 8 shows an example of the design and the operation of the liquid crystal display 1A. In Table 8, "Area" indicates the areas 161, 162, and 163 of the liquid crystal display 1A. "L" indicates the distance (mm) between the part of the lens member 7 and the part of the diffuser plate 8 in each of the areas 161, 162, and 163. "Luminance uniformity" indicates the luminance uniformity (%) described using Formula 8. "Luminance" indicates the luminance (cd/mm$^2$) of light emitted from each of the areas 161, 162, and 163. "P" indicates the pitch (mm) between the at least two light emitters 4 arranged in each of the areas 161, 162, and 163. "$\Theta$" indicates the half-value angle (°) of light emitted from the part of the lens member 7 in each of the areas 16a, 16b, and 16c. "H" indicates the haze value (%) of the part of the diffuser plate 8 in each of the areas 161, 162, and 163. "Drive current" indicates the drive current value (mA) applied to the light emitters 4 in each of the areas 161, 162, and 163. The same applies to Tables 9 to 11. The luminance uniformity and the luminance in Table 8 are shown in Tables 1 to 6. As shown in FIG. 4, the luminance of light emitted from each of the areas 161, 162, and 163 increases substantially in proportion to the drive current applied to the light emitter 4 in each of the areas 161, 162, and 163.

Table 8

| Area | L | Luminance uniformity | Luminance | P | Θ | H | Drive current |
|------|---|----------------------|-----------|---|---|---|---------------|
| 161 | 45 | 95.7 | 15714 | 4.2 | 20 | 35 | 65 |
| 162 | 35 | 99.1 | 14286 | 4.2 | 20 | 52 | 65 |
| 163 | 25 | 96.3 | 12158 | 4.2 | 39 | 52 | 65 |

The liquid crystal display 1A in Table 8 has different half-value angles Θ and different haze values H between the first area 161, the second area 162, and the third area 163. As shown in Table 8, the liquid crystal display 1A including the liquid crystal panel 9 tilted with respect to the backlight 2 can appropriately determine the pitch P, the half-value angle Θ, and the haze value H in each of the areas 161, 162, and 163 based on the distance L between the part of the lens member 7 and the part of the diffuser plate 8 to increase the luminance uniformity of each of the areas 161, 162, and 163. This allows more effective local dimming control.

Table 9

| Area | L | Luminance uniformity | Luminance | P | Θ | H | Drive current |
|------|---|----------------------|-----------|---|---|---|---------------|
| 161 | 45 | 95.7 | 12158 | 4.2 | 20 | 35 | 50 |
| 162 | 35 | 99.1 | 12158 | 4.2 | 20 | 52 | 55 |
| 163 | 25 | 96.3 | 12158 | 4.2 | 39 | 52 | 65 |

Table 9 shows the liquid crystal display 1A in table 8 setting, for each of the areas 161, 162, and 163, a drive current to be supplied to the multiple light emitters 4. As shown in Table 9, the drive current to be supplied to the light emitters 4 in the first area 161 and the second area 162 is lower than the drive current to be supplied to the light emitters 4 in the third area 163. This can maintain the luminance uniformity of the first area 161, the second area 162, and the third area 163, and can also allow the first area 161 and the second area 162 to have the luminance matching or substantially matching the luminance of the third area 163. This allows more effective local dimming control.

Although Table 9 shows an example in which the first area 161 and the second area 162 have lower luminance to match or substantially match the luminance of the third area 163, the structure is not limited to this example. The second area 162 and the third area 163 may have higher luminance to match or substantially match the luminance of the first area 161. The first area 161 may instead have lower luminance and the third area 163 may have higher luminance, allowing the first area 161 and the third area 163 to have luminance matching or substantially matching the luminance of the second area 162.

Table 10

| Area | L | Luminance uniformity | Luminance | P | Θ | H | Drive current |
|------|---|----------------------|-----------|---|---|---|---------------|
| 161 | 45 | 95.7 | 15714 | 4.2 | 20 | 35 | 65 |
| 162 | 35 | 95.8 | 8316 | 5 | 39 | 52 | 65 |
| 163 | 25 | 96.3 | 12158 | 4.2 | 39 | 52 | 65 |

Table 10 shows another example of the design and the operation of the liquid crystal display 1A. The liquid crystal display 1A in Table 10 has different pitches P between the first area 161 and the second area 162 and between the third area 163 and the second area 162, different half-value angles Θ between the first area 161 and the second area 162 and between the first area 161 and the third area 163, and different haze values H between the first area 162 and the second area 162 and between the first area 162 and the third area 163. As shown in Table 10, the liquid crystal display 1A including the liquid crystal panel 9 tilted with respect to the backlight 2 can appropriately determine the pitch P, the half-value angle Θ, and the haze value H in each of the areas 161, 162, and 163 based on the distance L between the part of the lens member 7 and the part of the diffuser plate 8 to increase the luminance uniformity of each of the areas 161, 162, and 163. This allows more effective local dimming control.

Table 11

| Area | L | Luminance uniformity | Luminance | P | Θ | H | Drive current |
|------|-----|------|-------|-----|----|----|------|
| 161 | 45 | 95.7 | 12158 | 4.2 | 20 | 35 | 50 |
| 162 | 35 | 95.8 | 12158 | 5 | 39 | 52 | 95 |
| 163 | 25 | 96.3 | 12158 | 4.2 | 39 | 52 | 65 |

Table 11 shows the liquid crystal display 1A in table 10 setting, for each of the areas 161, 162, and 163, a drive current to be supplied to the multiple light emitters 4. As shown in Table 11, the drive current to be supplied to the light emitters 4 in the first area 161 is lower than the drive current to be supplied to the light emitters 4 in the third area 163, and the drive current to be supplied to the light emitters 4 in the second area 162 is higher than the drive current to be supplied to the light emitters 4 in the third area 163. This can maintain the luminance uniformity of the first area 161, the second area 162, and the third area 163, and can also allow the first area 161 and the second area 162 to have the luminance matching or substantially matching the luminance of the third area 163. This allows more effective local dimming control.

Although Table 11 shows an example in which the first area 161 has lower luminance and the second area 162 has higher luminance to allow the first area 161 and the second area 162 to have the luminance matching or substantially matching the luminance of the third area 163, the structure is not limited to this example. The second area 162 and the third area 163 may have higher luminance to match or substantially match the luminance of the first area 161. The first area 161 and the third area 163 may instead have lower luminance to match or substantially match the luminance of the second area 162.

For the liquid crystal panel 9 tilted with respect to the backlight 2 as described above, the pitch P, the half-value angle Θ, and the haze value H are determined as appropriate in each of the multiple areas 16 based on the distance L between the part of the lens member 7 and the part of the diffuser plate 8, and the drive current to be supplied to the multiple light emitters 4 is set for each of the areas 16 for more effective local dimming control, thus causing the user 12 to view a clearer virtual image 10Q with a sense of depth.

The technique according to one or more embodiments allows light with high luminance and high luminance uniformity to be incident on the liquid crystal panel. This allows more effective local dimming control, causing the user of the virtual image display device to view a clearer virtual image.

In one or more embodiments of the present disclosure, the x-axis, the y-axis, and the z-axis are used for ease of explanation and may be interchangeable with one another. The orthogonal coordinate system including the x-axis, the y-axis, and the z-axis is used to describe the structures according to one or more embodiments of the present disclosure. The positional relationship between the components in one or more embodiments of the present disclosure is not limited to being orthogonal.

The present disclosure may have aspects (1) to (12) described below.

(1) A liquid crystal display, comprising:

a backlight including

a substrate including a first surface, and
a plurality of light emitters located on the first surface;

a lens member configured to anisotropically diffuse light emitted from the backlight;
a diffuser plate configured to diffuse the light emitted from the lens member; and
a liquid crystal panel configured to receive the light emitted from the diffuser plate,
wherein the lens member and the diffuser plate are at a distance of 0 to 72 mm inclusive.

(2) The liquid crystal display according to (1), wherein
the distance is determined based on a pitch at which the plurality of light emitters is arranged, a half-value angle of the light emitted from the lens member, and a haze value of the diffuser plate.
(3) The liquid crystal display according to (2), wherein
the half-value angle is 20 to 39° inclusive.
(4) The liquid crystal display according to (2) or (3), wherein
the haze value is 35 to 76% inclusive.
(5) The liquid crystal display according to any one of (2) to (4), wherein
the pitch is 4 to 6 mm inclusive.
(6) The liquid crystal display according to any one of (1) to (5), wherein

the backlight further includes an optical member configured to collect light emitted from the plurality of light emitters.

(7) The liquid crystal display according to any one of (1) to (6), wherein
the liquid crystal panel includes a display surface tilted with respect to the first surface.

(8) The liquid crystal display according to any one of (1) to (7), wherein

the liquid crystal display includes a plurality of areas each including

a part of the backlight including at least two light emitters,
a part of the lens member through which light emitted from the part of the backlight passes,
a part of the diffuser plate, and
a part of the liquid crystal panel, and

each of the plurality of areas has a different distance between the part of the lens member and the part of the diffuser plate.

(9) The liquid crystal display according to (8), wherein
a pitch at which the plurality of light emitters is arranged, a half-value angle of the light emitted from the lens member, and a haze value of the diffuser plate are determined for each of the plurality of areas based on the distance between the part of the lens member and the part of the diffuser plate.

(10) The liquid crystal display according to (8) or (9), wherein
the liquid crystal display is configured to set, for each of the plurality of areas, a drive current to be supplied to the plurality of light emitters.

(11) A virtual image display device, comprising:

the liquid crystal display according to any one of (1) to (10); and
an optical system configured to cause a user to view image light emitted from the liquid crystal display as a virtual image.

(12) The virtual image display device according to (11), wherein
the virtual image display device is configured to perform local dimming control of the plurality of light emitters based on a display appearing on the liquid crystal display.

REFERENCE SIGNS

1, 1A liquid crystal display
2 backlight
3 substrate
3a first surface
4 light emitter
5 optical member
6 reflector
6a upper end
6b side surface
7 lens member
8 diffuser plate
9 liquid crystal panel
9a display surface
10 virtual image display device
10Q virtual image
11 optical system
11a first optical member
11b second optical member
12 user
13 movable body
14 light source
14a light source surface

15 illumination surface
16, 161, 162, 163 area

**Claims**

1. A liquid crystal display, comprising:

   a backlight including

      a substrate including a first surface, and
      a plurality of light emitters located on the first surface;

   a lens member configured to anisotropically diffuse light emitted from the backlight;
   a diffuser plate configured to diffuse the light emitted from the lens member; and
   a liquid crystal panel configured to receive the light emitted from the diffuser plate,
   wherein the lens member and the diffuser plate are at a distance of 0 to 72 mm inclusive.

2. The liquid crystal display according to claim 1, wherein
   the distance is determined based on a pitch at which the plurality of light emitters is arranged, a half-value angle of the light emitted from the lens member, and a haze value of the diffuser plate.

3. The liquid crystal display according to claim 2, wherein
   the half-value angle is 20 to 39° inclusive.

4. The liquid crystal display according to claim 2 or claim 3, wherein
   the haze value is 35 to 76% inclusive.

5. The liquid crystal display according to any one of claims 2 to 4, wherein
   the pitch is 4 to 6 mm inclusive.

6. The liquid crystal display according to any one of claims 1 to 5, wherein
   the backlight further includes an optical member configured to collect light emitted from the plurality of light emitters.

7. The liquid crystal display according to any one of claims 1 to 6, wherein
   the liquid crystal panel includes a display surface tilted with respect to the first surface.

8. The liquid crystal display according to any one of claims 1 to 7, wherein

   the liquid crystal display includes a plurality of areas each including

      a part of the backlight including at least two light emitters,
      a part of the lens member through which light emitted from the part of the backlight passes,
      a part of the diffuser plate, and
      a part of the liquid crystal panel, and

   each of the plurality of areas has a different distance between the part of the lens member and the part of the diffuser plate.

9. The liquid crystal display according to claim 8, wherein
   a pitch at which the plurality of light emitters is arranged, a half-value angle of the light emitted from the lens member, and a haze value of the diffuser plate are determined for each of the plurality of areas based on the distance between the part of the lens member and the part of the diffuser plate.

10. The liquid crystal display according to claim 8 or claim 9, wherein
    the liquid crystal display is configured to set, for each of the plurality of areas, a drive current to be supplied to the plurality of light emitters.

11. A virtual image display device, comprising:

the liquid crystal display according to any one of claims 1 to 10; and
an optical system configured to cause a user to view image light emitted from the liquid crystal display as a virtual image.

12. The virtual image display device according to claim 11, wherein
the virtual image display device is configured to perform local dimming control of the plurality of light emitters based on a display appearing on the liquid crystal display.

## FIG. 1

## FIG. 2

FIG. 3

FIG. 4

FIG. 5

FIG. 6A

## FIG. 6B

## FIG. 7

FIG. 8

FIG. 9

FIG. 10

FIG. 11

## INTERNATIONAL SEARCH REPORT

| International application No. |
| --- |
| **PCT/JP2024/004682** |

**A. CLASSIFICATION OF SUBJECT MATTER**

*G02F 1/13357*(2006.01)i; *F21S 2/00*(2016.01)i; *F21V 3/00*(2015.01)i; *F21V 9/40*(2018.01)i; *G02F 1/1335*(2006.01)i; *F21Y 115/10*(2016.01)n; *F21Y 115/15*(2016.01)n; *F21Y 115/30*(2016.01)n

FI: G02F1/13357; G02F1/1335; F21S2/00 481; F21V3/00 320; F21V3/00 530; F21V9/40 400; F21Y115:10; F21Y115:15; F21Y115:30

According to International Patent Classification (IPC) or to both national classification and IPC

**B. FIELDS SEARCHED**

Minimum documentation searched (classification system followed by classification symbols)

G02F1/13357; G02F1/1335; F21S2/00; F21V3/00; F21V9/40; F21Y115/10; F21Y115/15; F21Y115/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-18706 A (HAYASHI TELEMPU CO., LTD.) 01 February 2018 (2018-02-01) paragraphs [0021]-[0038], fig. 1, 3, 5 | 1-2, 4-6, 11 |
| Y | | 7-8, 12 |
| A | | 3, 9-10 |
| Y | JP 2017-151404 A (DENSO CORPORATION) 31 August 2017 (2017-08-31) paragraphs [0017], [0020], [0107]-[0109], fig. 15 | 7-8 |
| Y | JP 2006-500753 A (SIEMENS AG) 05 January 2006 (2006-01-05) paragraphs [0024]-[0027], fig. 1, 3-4 | 7-8 |
| Y | JP 2019-101056 A (JAPAN DISPLAY INC.) 24 June 2019 (2019-06-24) paragraph [0010] | 12 |

☐ Further documents are listed in the continuation of Box C.     ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **05 March 2024** | **19 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/004682**

| Box No. III | Observations where unity of invention is lacking (Continuation of item 3 of first sheet) |
| --- | --- |

This International Searching Authority found multiple inventions in this international application, as follows:

Claims are classified into two inventions below.

(Invention 1) Claims 1-6, 11-12

Document 1 discloses a "head-up display device 700 comprising: a backlight 200 including a plurality of light sources 10 soldered to a wiring board 12, a condensing lens 20, a collimator lens array 30, and a scattering sheet formed of only a second scattering sheet 50; a liquid crystal panel projection member 300; and an optical system 400," and claims 1-2 lack novelty in light of document 1, and thus do not have a special technical feature. However, claim 3 dependent on claim 1 has the special technical feature of the "liquid crystal display device according to claim 2, wherein the half-value angle is equal to or more than 20° and equal to or less than 39°." Therefore, claims 1-3 are classified as invention 1.

Claims 4-6 and 11-12 are dependent on claim 1, inventively related to claim 1, and thus classified as invention 1.

(Invention 2) Claims 7-10

It cannot be said that claim 7 has the special technical feature identical or corresponding to claim 3 classified as invention 1.

Claim 7 is dependent on claim 1 classified as invention 1, but a specific problem of a "virtual image having sense of depth is visually recognized," which is understood from the technical feature added to claim 1 and achieved by the invention, has little relevancy to a feature of "increasing the luminance of the emission light of the backlight and luminance uniformity," which is an objective to be achieved by claim 1. Therefore, it is not considered that claims 7-10 are inventively related to claim 1.

Claim 7 is not substantially identical to or similarly closely related to any of the claims classified as invention 1. Therefore, claim 7 cannot be classified as invention 1.

Claim 7 has the special technical feature of the "liquid crystal display device according to any one of claims 1 to 6, wherein a display surface of the liquid crystal panel is inclined with respect to the first surface," and is thus classified as invention 2.

Claim 8 has the special technical feature corresponding to claim 7 classified as invention 2, and is thus classified as invention 2.

Claims 9-10 are dependent on claim 8, inventively related to claim 8, and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/004682**

| Patent document cited in search report | | | Publication date (day/month/year) | Patent family member(s) | | | Publication date (day/month/year) |
|---|---|---|---|---|---|---|---|
| JP | 2018-18706 | A | 01 February 2018 | CN | 107664843 | A | |
| JP | 2017-151404 | A | 31 August 2017 | US | 2019/0056086 | A1 | |
| | | | | paragraphs [0031], [0034], [0122]-[0124], fig. 15 | | | |
| | | | | WO | 2017/145557 | A1 | |
| | | | | DE | 112017000946 | B4 | |
| | | | | CN | 108700749 | A | |
| | | | | KR | 10-2018-0112013 | A | |
| JP | 2006-500753 | A | 05 January 2006 | US | 2004/0062040 | A1 | |
| | | | | paragraphs [0029]-[0032], fig. 1, 3-4 | | | |
| | | | | WO | 2004/031843 | A1 | |
| | | | | EP | 1549997 | A1 | |
| | | | | DE | 10245580 | A1 | |
| JP | 2019-101056 | A | 24 June 2019 | US | 2019/0162960 | A1 | |
| | | | | paragraph [0024] | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019138722 A